(19) Europäisches Patentamt / European Patent Office / Office européen des brevets

(11) **EP 3 785 816 B1**

(12) **EUROPEAN PATENT SPECIFICATION**

(45) Date of publication and mention
of the grant of the patent:
**07.12.2022 Bulletin 2022/49**

(21) Application number: **18933897.3**

(22) Date of filing: **26.12.2018**

(51) International Patent Classification (IPC):
**B21C 37/08** *(2006.01)*    **B21H 8/00** *(2006.01)*
**B21D 5/12** *(2006.01)*    **B23D 15/06** *(2006.01)*
**C21D 9/46** *(2006.01)*    **C21D 1/34** *(2006.01)*

(52) Cooperative Patent Classification (CPC):
**B21H 8/005; B21C 37/0818; B21C 37/0822;
B21C 37/083; B21C 37/158; B30B 3/005;
B44B 5/0047; B44B 5/024; B44B 5/026;
C21D 1/34; C21D 1/78; C21D 8/105; C21D 9/08;**
B21D 13/04

(86) International application number:
**PCT/KR2018/016609**

(87) International publication number:
**WO 2020/059969 (26.03.2020 Gazette 2020/13)**

(54) **EMBOSSED STAINLESS PIPE MANUFACTURING APPARATUS AND EMBOSSED STAINLESS PIPE MANUFACTURING METHOD USING SAME**

VORRICHTUNG ZUR HERSTELLUNG EINES GEPRÄGTEN EDELSTAHLROHRS UND DIESE VERWENDENDES VERFAHREN ZUR HERSTELLUNG EINES GEPRÄGTEN EDELSTAHLROHRS

APPAREIL DE FABRICATION DE TUYAU INOXYDABLE GAUFRÉ ET PROCÉDÉ DE FABRICATION DE TUYAU INOXYDABLE GAUFRÉ L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2018 KR 20180112755**

(43) Date of publication of application:
**03.03.2021 Bulletin 2021/09**

(73) Proprietors:
• **Lee, Bohyun**
 **Busan 49208 (KR)**
• **Lee, Changyub**
 **Busan 47300 (KR)**

(72) Inventors:
• **Lee, Bohyun**
 **Busan 49208 (KR)**
• **Lee, Changyub**
 **Busan 47300 (KR)**

(74) Representative: **Cabinet Chaillot
16/20, avenue de l'Agent Sarre
B.P. 74
92703 Colombes Cedex (FR)**

(56) References cited:
JP-A- 2002 028 729    KR-A- 20080 111 951
KR-A- 20090 055 882    KR-B1- 100 964 965
KR-B1- 101 868 064

**Description**

[Technical Field]

The present invention relates to an improvement to the invention entitled *EMBOSSED PIPE MANUFACTURING APPARATUS CAPABLE OF EASILY WELDING OPPOSITE SIDE SURFACES OF EMBOSSED METAL SHEET AND EMBOSSED PIPE MANUFACTURING METHOD USING THE SAME,* which was filed in the name of the applicant of the present application on February 28, 2018 under Korean Patent Application No. 10-2018-24243 and was accorded Korean Registered Patent No. 10-1868064 on June 8, 2018, and more particularly relates to an embossed stainless steel pipe manufacturing apparatus including a slitting machine configured to slit a large-width flat stainless steel sheet into a plurality of flat sheets such that side surfaces of each of the slit flat stainless steel sheets 100 are formed vertically, thereby solving difficulty in setting the width of a flat stainless steel sheet corresponding to the outer diameter of a pipe, and a tempering electric furnace configured to enable smooth manufacture of an embossed stainless steel pipe using a thick stainless steel sheet having a thickness of 2.5 mm or more.

In addition, the present invention relates to an embossed stainless steel pipe manufacturing method improved through the addition of a process of setting the width of a stainless steel sheet corresponding to the outer diameter of a stainless steel pipe to be produced, a slitting process, an optimum gap adjustment process in consideration of elasticity formed by the structural change, the embossed degree, and the embossed pattern of an embossed stainless steel sheet formed in an embossing process using an embossing roller, and a molten fusion process using the same material suitable for an embossed stainless steel pipe requiring narrow, precise, and accurate welding based on technology accumulated through experiments over years.

[Background Art]

Metal pipes may be classified into a metal pipe manufactured by extruding molten metal and a metal pipe manufactured by curving and rounding a flat metal sheet using a pipe mill to form a rounded pipe and welding opposite side surfaces of the rounded pipe in the state of being matched with each other in the longitudinal direction, in which case the metal pipe has a seam portion.

The former is a metal pipe that has a large thickness and exhibits high pressure resistance, which is used in large quantities for various purposes, such as a water supply pipe, a sewer pipe, a petroleum pipe, a highpressure gas pipe, a liquid reactant feed pipe for chemical factories, an oil pipeline, and an electric pipe.

The latter, which is a metal pipe that has a relatively small thickness and thus has lower support force or rigidity than the metal pipe manufactured using the extrusion method, is mainly used for decorative purposes, such as an indoor handrail and a streetlamp post. In addition, the latter metal pipe does not match the former metal pipe in terms of purpose and demand.

Although the above metal pipes have been used for the purposes mentioned above, the purposes of the metal pipes have been diversified and demand for the metal pipes has increased due to gradual improvement of metal pipe processing technology.

In company with such a trend, demand for embossed pipes has increased together with improvement in processing technology in a technical field related to the embossed stainless steel pipes.

As products compared to an embossed stainless steel pipe according to the present invention, a metal pipe having a pattern formed on a smooth surface thereof by partially plating a colored metal, such as nickel, a pipe having a pattern formed by plasma ion deposition using titanium oxide, a pipe having a pattern formed using an etching method, and a metal pipe patterned and embossed through a mechanical cutting process have been brought to market.

Among processing technologies applied to the metal pipe, known technologies related to the present invention will be described.

First, Korean Registered Patent No. 10-1611572 (registered on April 5, 2016) discloses an embossing technology entitled *PATTERN FORMING MACHINE FOR METAL PIPES,* wherein, when a plunger is moved rearwards, an inner die installed in a housing is pushed by the plunger and thus is moved toward the inner circumferential surface of a metal pipe, and a relief pattern formed on the outer circumferential surface of the inner die is engaged with an intaglio pattern formed on the inner circumferential surface of an outer die, whereby patterns are formed on the surfaces of the metal pipe located between the inner die and the outer die.

Second, Korean Registered Patent No. 10-404895 (registered on October 28, 2003) discloses a method of forming embossed protrusions on a metal pipe entitled *EMBOSSED PROTRUSION FORMING APPARATUS FOR METAL PIPES,* wherein a movable fixing stand fixedly installed at the middle of a frame, left and right movable fixing stands fixedly installed at the frame, and first moving force generation members connected to the rear sides thereof are moved inside a plurality of circular casings so as to be matched therewith in order to form a cylindrical casing having a plurality of circular casing through-holes, a metal pipe is inserted into the cylindrical casing and is fixed therein so as to be in tight contact therewith, a pipe-shaped core having punches mounted in a plurality of through-holes formed in the pipe-shaped circumferential surface thereof is inserted into the metal pipe and is fixed therein so as to be in tight contact therewith such that the casing through-holes formed in the inner surface of the cylindrical casing are matched with large-diameter core through-holes formed in the outer surface of the core, a plunger, which has a size equal to the inner diameter of the core, has a conical front end, and has a bar-shaped body, is inserted using strong pressure of a cylinder of a second moving force generation member such that lower-end bent portions of the punch large-diameter portions protruding inwards inside small-diameter through-holes pushed vertically upwards by the conical inclined surface of the front end of the plunger and thus punches of the dome-shaped large-diameter portions integrally formed with the small-diameter portions are also pushed upwards toward the casing through-holes formed in the inner surface of the casing, whereby the surface of the pipe are bent and protruded and thus a plurality of protrusions is formed on the pipe.

Third, Korean Registered Patent No. 10-1399231 (registered on May 19, 2014) discloses an apparatus for forming circular recesses in a metal pipe entitled *PIPE EMBOSSING APPARATUS HAVING IMPROVED STRUCTURE,* wherein the apparatus includes a cylinder unit including cylinders configured to be operated by pneumatic pressure and pistons configured to be operated by the cylinders and embossing protrusions formed on the front ends of the pistons, and the cylinders of the apparatus strike the embossing protrusions by pneumatic pressure at predetermined intervals based on the center line of the metal pipe in the vertical direction to form circular recesses on the metal pipe.

In the above conventional art, the pattern formed on the surface of the metal pipe is greatly deteriorated in terms of delicacy and sophistication.

A metal pipe having a smooth surface cut to a predetermined length is mounted in the manufacturing apparatus, and an embossed stainless steel pipe is manufactured through first to fifth steps or first to sixth steps and is then discharged from the manufacturing apparatus. Since embossed pipes are not continuously manufactured, productivity is low, and therefore mass production is impossible. Furthermore, production cost is high.

In addition, the embossed pattern of the metal pipe having circular recesses formed thereon is also neither delicate nor sophisticated, and is rather simple.

Besides, Korean Registered Patent No. 10-1017890 (registered on February 21, 2011) entitled *DIAMOND-SHAPED DIE ON OUTER CIRCUMFERENCE OF PIPE AND FORMING METHOD USING THE SAME* and Korean Registered Patent No. 10-1604011 (registered on March 10, 2016) entitled *PIPE BELLOWS FORMING APPARATUS* are disclosed as technologies related to an apparatus for embossing the outer circumferential surface of a pipe.

Since, conventionally, in most cases, smooth metal pipes, each having a weld seam portion formed in the longitudinal direction, are manufactured from flat metal sheets using a pipe mill, the smooth metal pipes are mounted in an embossing housing one by one, and embossed stainless steel pipes are manufactured through five or six steps, as described above, the embossed stainless steel pipes are neither delicate nor sophisticated, compared to an embossed stainless steel pipe manufactured using a pipe mill from an embossed stainless steel sheet obtained by embossing a flat stainless steel sheet using an embossing roller. Furthermore, a continuous repetitive process is impossible, whereby productivity is deteriorated and price competitiveness is reduced due to an increase in power consumption and labor costs.

In order to solve the above problems related to the conventional embossed stainless steel pipe manufacturing apparatus and the embossed stainless steel pipe manufacturing method using the same, the applicant of the present application has developed an embossing roller capable of easily welding opposite side surfaces of an embossed stainless steel sheet, wherein an embossed stainless steel sheet is manufactured using the embossing roller, and the embossed stainless steel sheet passes through a pipe mill configured to manufacture a smooth stainless steel pipe.

In addition, when a stainless steel sheet is embossed using embossing rollers configured such that relief and intaglio embossing patterns formed thereon are engaged with each other so as to be matched with each other, a protruding embossed pattern is formed on the outer surface of the stainless steel sheet, and a concave embossed pattern is formed on the inner surface of the stainless steel sheet, whereby the ends of the embossed stainless steel sheet in the longitudinal direction or the lateral direction are curved due to the concave-convex structure formed by the embossed patterns. As a result, it is very difficult to weld the curved ends in the state of being matched with each other. In addition, the embossed patterns of the embossed stainless steel sheet are deformed by pressure and shear force generated while the embossed stainless steel sheet passes between upper and lower relief and intaglio embossing engagement curving rollers and between symmetrical engagement rounding rollers of the pipe mill, whereby the curved ends to be connected are not matched with each other, and therefore welding is substantially impossible.

In order to solve this problem, relief and intaglio embossing rollers capable of forming small-width planes at opposite side edges of the embossed stainless steel sheet were developed. In addition, the relief and intaglio embossing rollers were connected to a pipe mill configured to easily weld an embossed stainless steel pipe and to perform a continuous repetitive process, whereby it was possible to maximize production capability of the embossed stainless steel pipe. In connection therewith, an invention entitled *EMBOSSED STAINLESS STEEL PIPE MANUFACTURING APPARATUS AND EMBOSSED STAINLESS STEEL PIPE MANUFACTURING METHOD USING THE SAME* were filed and accorded Korean Registered Patent No. 10-1868064 (2018.06.08).

However, Korean Registered Patent No. 10-1868064 , which forms the basis for the preamble of claims 1 and 4, discloses technology for manufacturing an embossed stainless steel pipe from an embossed stainless steel sheet, the outer surface of which is a concave-convex curved surface, using a pipe mill configured to manufacture a smooth stainless steel pipe from a flat metal sheet, which is an invention that has been developed in Korea and other foreign countries for the first time and thus needs to be technically supplemented and improved.

The present invention relates to an improved embossed stainless steel pipe manufacturing apparatus, defined in claim 1, configured such that a slitting machine is further installed in front of an uncoiler of the embossed stainless steel pipe manufacturing apparatus disclosed in Korean Registered Patent No. 10-1868064 and such that a tempering device is further installed between the embossing roller and the pipe mill at the time of manufacturing an embossed stainless steel pipe having a large thickness. In addition, the present invention relates to an improved embossed stainless steel pipe manufacturing method, defined in claim 4, using the improved embossed stainless steel pipe manufacturing apparatus described above capable of solving problems that occur in the embossed stainless steel pipe manufacturing method disclosed in Korean Registered Patent No. 10-1868064, and more particularly to an embossed stainless steel pipe manufacturing method including processes capable of solving the following problems.

First, a process of setting the width of a flat stainless steel sheet necessary to obtain a precise outer diameter of an embossed stainless steel pipe to be produced and slitting a large-width band-type flat stainless steel sheet based on the set width is added must be added in order to obtain the precise outer diameter of the embossed stainless steel pipe.

Second, it is generally known that the thickness of a flat stainless steel sheet that can be embossed ranges from 0.5 to 5 mm and the embossed degree is possible up to 1.5 times the thickness of the flat stainless steel sheet. However, a flat stainless steel sheet having a thickness of 2.5 mm or more damages the embossing roller, and an embossed stainless steel sheet obtained therefrom is inferior to an embossed stainless steel sheet obtained by embossing a thin flat stainless steel sheet in terms of definition and sophistication of relief and intaglio embossed patterns.

In the case in which a soft flat stainless steel sheet having low hardness is used, definition and sophistication are guaranteed. However, the hardness of an embossed stainless steel sheet is greatly increased by embossing. In addition, tensile strength and bending strength of a stainless steel sheet are increased due to the large thickness of the stainless steel sheet, whereby it is not possible to smoothly curve and round the stainless steel sheet using the pipe mill, and power consumption is excessively increased. In a severe case, the operation of the pipe mill is stopped. Consequently, it is necessary to reduce the increased hardness of the embossed stainless steel sheet to low hardness before embossing through tempering.

Third, there is a problem related to adjustment of the gap between a male roller having a convex curved surface and a female roller having a concave curved surface, which are horizontally installed above and below and into which an embossed stainless steel sheet that is embossed by the embossing roller and is introduced into the pipe mill is inserted. In the case in which a smooth stainless steel pipe is manufactured from a flat stainless steel sheet using the pipe mill, the flat stainless steel sheet is inserted between the male and female curving rollers, curving and rounding are performed after the gap between the male and female rollers is adjusted using spiral fixing means in the state in which the male and female rollers are in contact with the flat stainless steel sheet due to weight of the male roller. However, an embossed stainless steel sheet exhibits elasticity due to an intaglio embossed pattern formed on the inner surface thereof so as to correspond to a relief embossed pattern formed on the outer surface thereof, and therefore the adjustment of the gap between the male and female curving rollers to curve the embossed stainless steel sheet is greatly different from the adjustment of the gap between the male and female curving rollers to curve the flat stainless steel sheet.

Fourth, the adjustment of the gap between the male and female curving rollers to curve an embossed stainless steel sheet is performed as follows. The embossed stainless steel sheet is inserted between the male and female curving rollers, the gap between the curving male roller and the curving female roller is reduced by a size corresponding to a range of 10 to 15% the height increased by embossing in the state in which the male curving roller and the female curving roller are in contact with the embossed stainless steel sheet due to weight of the male curving roller, and then curving and rounding are performed. In the case in which the gap between the curving male roller and the curving female roller is not adjusted so as to be reduced in the state in which the male curving roller and the female curving roller are in contact with the embossed stainless steel sheet, the curving rollers and the rounding rollers may idle, whereby curving and rounding may not be smoothly performed. In the case in which the gap between the curving male roller and the curving female roller is adjusted so as to be too small, the embossed pattern may be deformed, whereby a defective embossed stainless steel pipe is manufactured.

[Disclosure]

[Technical Problem]

The present invention is an improvement invention that supplements the invention entitled *EMBOSSED PIPE MANUFACTURING APPARATUS CAPABLE OF EASILY WELDING OPPOSITE SIDE SURFACES OF EMBOSSED METAL SHEET AND EMBOSSED PIPE MANUFACTURING METHOD USING THE SAME,* which was filed in the name of the applicant of the present application on February 28, 2018 under Korean Patent Application No. 10-2018-24243 and was accorded Korean Registered Patent No. 10-1868064 on June 8, 2018, and objects of the present invention are as follows.

First, the width of a flat stainless steel sheet that is used is changed, i.e. increased or decreased, during an embossing process and curving and rounding processes of a pipe mill, and the width of the flat stainless steel sheet is also changed depending on the embossed degree and the thickness of the stainless steel sheet that is used. Consequently, it is necessary to set the width of a flat stainless steel sheet used to manufacture an embossed stainless steel pipe having an outer diameter to be produced and to accurately vertically cut the stainless steel sheet. It is an object of the present invention to provide an embossed stainless steel pipe manufacturing apparatus and an embossed stainless steel pipe manufacturing method using the same capable of securing accuracy in outer diameter of an embossed stainless steel pipe and providing a high-quality embossed stainless steel pipe through installation of a width setting device and a slitting machine and the addition of processes performed by the width setting device and the slitting machine.

Second, in the case in which an embossed stainless steel pipe having a large thickness of 2.5 mm or more is manufactured, tensile strength and bending strength of an embossed stainless steel sheet greatly increase due to hardness of the embossed stainless steel sheet increased by embossing in addition to the large thickness thereof, whereby the embossed stainless steel sheet is not smoothly curved and rounded by the pipe mill, and therefore a defective embossed stainless steel pipe is manufactured. It is another second object of the present invention to provide an embossed stainless steel pipe manufacturing apparatus and an embossed stainless steel pipe manufacturing method using the same capable of smoothly manufacturing an embossed stainless steel pipe from a thick stainless steel sheet through installation of a tempering device configured to reduce hardness of an embossed stainless steel sheet to low hardness before embossing and the addition of a tempering process performed by the tempering device, thereby solving the above problem.

Third, in order to achieve curving and rounding through the pipe mill, it is necessary to adjust the gap between male and female engagement curving rollers, which are horizontally installed and into which an embossed stainless steel sheet is inserted in the state in which the outer surface of the embossed stainless steel sheet abuts the female roller and the inner surface of the embossed stainless steel sheet abuts the male roller. In the case in which a smooth stainless steel pipe is manufactured from a flat stainless steel sheet, the flat stainless steel sheet is inserted between the male and female engagement curving rollers, curving and rounding are performed to manufacture the smooth stainless steel pipe after the gap between the male and female rollers is adjusted in the state in which the male and female rollers are in contact with the flat stainless steel sheet due to weight of the male roller. In the case in which an embossed stainless steel pipe is manufactured using an embossed stainless steel sheet, however, this is greatly different from the above case. A protruding embossed pattern is formed on the outer surface of the embossed stainless steel sheet, and a concave embossed pattern is formed on the inner surface of the embossed stainless steel sheet, whereby the embossed stainless steel sheet exhibits elasticity in the upward-downward direction and slight elasticity in all directions. In the state in which the embossed stainless steel sheet is inserted between the female curving roller disposed below and the male curving roller disposed above and is in tight contact with the rollers due to weight of the male curving roller, however, the curving rollers idle, whereby curving and rounding may not be smoothly performed. In the case in which curving and rounding are performed in the state in which the gap between the rollers is adjusted so as to be too small, the embossed pattern may be deformed, whereby a defect rate is increased. For this reason, it is necessary to maintain the optimally adjusted gap. It is another object of the present invention to provide an embossed stainless steel pipe manufacturing apparatus and an embossed stainless steel pipe manufacturing method using the same capable of manufacturing a high-quality stainless steel pipe through maintenance of the optimally adjusted gap.

Fourth, it is a further object of the present invention to provide an embossed stainless steel pipe manufacturing apparatus and an embossed stainless steel pipe manufacturing method using the same capable of horizontally forming small-width planes formed at opposite side surfaces of an embossed stainless steel sheet so as to correspond to the level of a lower layer of the embossed stainless steel sheet and vertically forming the outer sections of the small-width planes to narrow a groove in a seam portion such that the seam portion is not visible, narrowing the upper end width of a V-shaped groove formed in the bottom of the seam portion to prevent a thinning phenomenon of the seam portion and at the same time to prevent opposite ends of the embossed stainless steel sheet from overlapping each other in the rounding rollers.

[Technical Solution]

In accordance with an aspect of the present invention, the above objects can be accomplished by the provision of an embossed stainless steel pipe manufacturing apparatus including an uncoiler (1) configured to provide a flat stainless steel sheet (100), a centering guide roller (2) configured to guide the flat stainless steel sheet (100) supplied from the uncoiler (1) to an embossing machine (3) located at the rear thereof, the embossing machine (3) being configured to emboss the flat stainless steel sheet (100) supplied via the centering guide roller (2) in order to form an embossed stainless steel sheet (100'), and a pipe mill (4) configured to curve and round the embossed stainless steel sheet (100') supplied through the embossing machine (3) in order to manufacture an embossed pipe (200) having a weld seam portion (201) formed in the longitudinal direction, the pipe mill also being configured to weld the weld seam portion (201) of the embossed stainless steel pipe (200) in order to complete the embossed stainless steel pipe (200), wherein the embossing machine (3) includes an embossing press roller (30) including an upper roller (31) having a relief embossing pattern formed thereon and a lower roller (32) having an intaglio embossing pattern formed thereon, the upper roller and the lower roller being configured to be rotated in a state of being engaged with each other, a frame unit (33) defining an outer framework of the embossing machine, the frame unit being configured to support the embossing press roller (30), and a hydraulic cylinder (34) installed at an upper end of the frame unit (33), the upper roller (31) including a roller body (311), rotary shafts (312) formed at centers of opposite side surfaces of the roller body (311), a relief embossing pattern unit (313) formed on a surface of the roller body (311), and a band-shaped groove (314) formed on the surface of the roller body (311) in the rotational direction of the roller so as to be lower than the relief embossing pattern unit (313) in order to partition the relief embossing pattern unit (313) at predetermined intervals, the lower roller (32) including a roller body (321), rotary shafts (322) formed at centers of opposite side surfaces of the roller body (321), an intaglio embossing pattern unit (323) formed on the surface of the roller body (321), and a band-shaped protrusion (324) formed on the surface of the roller body (321) in the rotational direction of the roller so as to be higher than the intaglio embossing pattern unit (323) in order to partition the intaglio embossing pattern unit (323) at predetermined intervals, the protrusion (324) being configured to be inserted into the groove (314), wherein the embossed stainless steel pipe manufacturing apparatus further includes a slitting machine (10-1) installed in front of the uncoiler (1) to slit a large-width flat stainless steel sheet into a plurality of flat sheets such that side surfaces of each of the slit flat stainless steel sheets (100) have vertical planes, the slitting machine (10-1) including a stainless steel coil (11-1) constituted by an uncut flat stainless steel sheet in a state of being wound, a stainless steel coil supply roller (12-1) forming a central rotary axis of the stainless steel coil (11-1), the stainless steel coil supply roller being configured to supply the flat stainless steel sheet to the uncoiler (1) through rotation thereof, and a plurality of slitters (13-1) installed at the rear of the stainless steel coil (11-1) to slit the large-width flat stainless steel sheet (100) supplied from the stainless steel coil supply roller (12-1) to the uncoiler (1) into a plurality of flat sheets, the slitters being installed in the lateral direction at intervals adjusted based on the width of the flat stainless steel sheet (100) corresponding to the outer diameter of a stainless steel pipe to be manufactured, the slitters being configured to slit the flat stainless steel sheet (100) such that opposite side surfaces of the flat stainless steel sheet have vertical planes.

The flat stainless steel sheets (100) slit by the slitting machine (10-1) are wound around a plurality of uncoilers (1), and each of the uncoilers (1) having the slit flat stainless steel sheets (100) wound therearound is separated from the slitting machine (10-1) and is mounted in front of the centering guide roller 2 so as to be used.

In accordance with another aspect of the present invention, there is provided an embossed stainless steel pipe manufacturing method including a first step of supplying a flat stainless steel sheet (100) to an embossing machine (3) from an uncoiler (1) via a centering guide roller (2), a second step of embossing the flat stainless steel sheet (100) using an embossing press roller (30) of the embossing machine (3) to form an embossed stainless steel sheet (100') having an embossed pattern formed thereon, and a third step of supplying the embossed stainless steel sheet (100') to a pipe mill (4) to manufacture an embossed stainless steel pipe (200) having a weld seam portion (201) formed in the longitudinal direction through curving and rounding processes and welding the weld seam portion (201) of the embossed stainless steel pipe (200) to complete the embossed stainless steel pipe (200), wherein the embossed stainless steel sheet (100') has an embossed structure formed on the outer surface thereof, small-width planes are formed at opposite side edges of the embossed stainless steel sheet, opposite side surfaces of the embossed stainless steel sheet (100') are brought into contact with each other through the curving and rounding processes of the pipe mill (4), whereby the weld seam portion (201) is formed so as to have a V-shaped groove (201a), and the V-shaped groove (201a) is melted and fused by welding, whereby the embossed stainless steel pipe (200) is completed, wherein the embossed stainless steel pipe manufacturing method further includes, as a pre-process of the first step, setting the width of a flat stainless steel sheet necessary to obtain the outer diameter of an embossed stainless steel pipe to be produced, disposing slitters (13-1) of a slitting machine (10-1) according to the width of the flat stainless steel sheet, and slitting a large-width flat stainless steel sheet (100) supplied from a stainless steel coil supply roller (12-1) to the uncoiler (1) into a plurality of flat sheets according to the set width using the slitting machine (10-1) such that opposite side surfaces of the flat stainless steel sheet (100) have vertical planes.

[Advantageous Effects]

An embossed stainless steel pipe manufacturing apparatus according to the present invention and an embossed stainless steel pipe manufacturing method using the same have the following effects.

First, it is possible to accurately set the width of a flat stainless steel sheet used to manufacture an embossed stainless steel pipe having a required outer diameter, whereby it is possible to easily manufacture a stainless steel pipe having a required outer diameter. In the case in which an embossed stainless steel pipe is manufactured using a flat stainless steel sheet having a large thickness of 2.5 mm or more, tensile strength and bending strength of the flat stainless steel sheet greatly increase due to the hardness of the flat stainless steel sheet greatly increased by embossing in addition to the large thickness thereof. In the present invention, it is possible to temper the embossed stainless steel sheet in a high-temperature furnace such that the hardness of the embossed stainless steel sheet is reduced to low hardness before embossing, whereby it is possible to smoothly perform curing and rounding using a pipe mill and thus to obtain an embossed stainless steel pipe having improved quality.

Second, it is possible to adjust the gap between male and female rollers of the pipe mill, into which a stainless steel sheet embossed by a relief and intaglio engagement embossing roller is inserted, in the best state, whereby it is possible to prevent idling of curving rollers and vertical and horizontal symmetrical engagement rounding rollers and to smoothly perform the movement of an overall pipe line without damage to an embossed pattern, and therefore it is possible to smoothly perform all process without overwork of apparatuses in front and rear of the rollers.

Third, opposite side ends of an embossed stainless steel sheet are formed vertically, and small-width planes are horizontally formed at the outside thereof at the level of a lower layer of the embossed stainless steel sheet. Consequently, it is possible to reduce the width of the entrance of a groove of a seam portion so as to be the minimum after an embossed stainless steel is manufactured, whereby it is possible to prevent a weld portion of a V-shaped groove from being visible from the bottom surface of the groove of the seam portion. In addition, the ends of the small-width planes are formed vertically, whereby it is possible to minimize the width of the entrance of V-shaped groove formed by complete rounding of the embossed stainless steel pipe and to prevent the ends of the small-width planes from overlapping each other between the symmetrical engagement rounding rollers at a welding step by using the same material, preventing thinning of a weld seam portion, and completing rounding. Furthermore, curving and rounding are performed through the addition of manufacturing processes based on further installation of a slitting machine and a tempering device and optimum adjustment of the gap between the curving rollers, whereby it is possible to secure dimensional stability of the embossed stainless steel pipe and to improve quality of the embossed stainless steel pipe.

[Description of Drawings]

FIG. 1 is a view showing the overall construction of an embossed stainless steel pipe manufacturing apparatus according to a first embodiment of the present invention.

FIG. 2 is a view showing the overall construction of an embossed stainless steel pipe manufacturing apparatus according to a second embodiment of the present invention.

FIG. 3 is a view showing the overall construction of an embossed stainless steel pipe manufacturing apparatus according to a third embodiment of the present invention.

FIG. 4 is a perspective view of a slitting machine according to the present invention.

FIG. 5 is a perspective view of a tempering electric furnace according to the present invention.

FIG. 6 is a perspective view of a curving adjustment means according to the present invention.

FIG. 7 is a front view of the curving adjustment means according to the present invention.

FIG. 8 is a perspective view of a first embodiment of an embossing press roller constituting the embossed stainless steel pipe manufacturing apparatus according to the present invention.

FIG. 9 is a front view of the first embodiment of the embossing press roller constituting the embossed stainless steel pipe manufacturing apparatus according to the present invention.

FIG. 10 is a front view of a second embodiment of the embossing press roller constituting the embossed stainless steel pipe manufacturing apparatus according to the present invention.

FIG. 11 is a front view of a third embodiment of the embossing press roller constituting the embossed stainless steel pipe manufacturing apparatus according to the present invention.

FIG. 12 is a front view of a fourth embodiment of the embossing press roller constituting the embossed stainless steel pipe manufacturing apparatus according to the present invention.

FIG. 13 is a front view of a fifth embodiment of the embossing press roller constituting the embossed stainless steel pipe manufacturing apparatus according to the present invention.

FIG. 14 is a front view of a sixth embodiment of the embossing press roller constituting the embossed stainless steel pipe manufacturing apparatus according to the present invention.

FIG. 15 is a front view showing a quadrangular pyramidal embossing pattern as an embossing pattern of the embossing press roller according to the present invention.

FIG. 16 is a front view showing a regular hexagonal embossing pattern as the embossing pattern of the embossing press roller according to the present invention.

FIG. 17 is a front view showing a comb-shaped embossing pattern as the embossing pattern of the embossing press roller according to the present invention.

[Best Mode]

An embossed stainless steel pipe manufacturing apparatus including an uncoiler (1) configured to provide a flat stainless steel sheet (100), a centering guide roller (2) configured to guide the flat stainless steel sheet (100) supplied from the uncoiler (1) to an embossing machine (3) located at the rear thereof, the embossing machine (3) being configured to emboss the flat stainless steel sheet (100) supplied via the centering guide roller (2) in order to form an embossed stainless steel sheet (100'), and a pipe mill (4) configured to curve and round the embossed stainless steel sheet (100') supplied through the embossing machine (3) in order to manufacture an embossed pipe (200) having a weld seam portion (201) formed in the longitudinal direction, the pipe mill also being configured to weld the weld seam portion (201) of the embossed stainless steel pipe (200) in order to complete the embossed stainless steel pipe (200), wherein the embossing machine (3) includes an embossing press roller (30) including an upper roller (31) having a relief embossing pattern formed thereon and a lower roller (32) having an intaglio embossing pattern formed thereon, the upper roller and the lower roller being configured to be rotated in a state of being engaged with each other, a frame unit (33) defining the outer framework of the embossing machine, the frame unit being configured to support the embossing press roller (30), and a hydraulic cylinder (34) installed at the upper end of the frame unit (33), the upper roller (31) including a roller body (311), rotary shafts (312) formed at centers of opposite side surfaces of the roller body (311), a relief embossing pattern unit (313) formed on the surface of the roller body (311), and a band-shaped groove (314) formed on the surface of the roller body (311) in the rotational direction of the roller so as to be lower than the relief embossing pattern unit (313) in order to partition the relief embossing pattern unit (313) at predetermined intervals, the lower roller (32) including a roller body (321), rotary shafts (322) formed at centers of opposite side surfaces of the roller body (321), an intaglio embossing pattern unit (323) formed on the surface of the roller body (321), and a band-shaped protrusion (324) formed on the surface of the roller body (321) in the rotational direction of the roller so as to be higher than the intaglio embossing pattern unit (323) in order to partition the intaglio embossing pattern unit (323) at predetermined intervals, the protrusion (324) being configured to be inserted into the groove (314), wherein the embossed stainless steel pipe manufacturing apparatus further includes a slitting machine (10-1) installed in front of the uncoiler (1) to slit a large-width flat stainless steel sheet into a plurality of flat sheets such that side surfaces of each of the slit flat stainless steel sheets (100) have vertical planes, the slitting machine (10-1) including a stainless steel coil (11-1) constituted by an uncut flat stainless steel sheet in a state of being wound, a stainless steel coil supply roller (12-1) forming a central rotary axis of the stainless steel coil (11-1), the stainless steel coil supply roller being configured to supply the flat stainless steel sheet to the uncoiler (1) through rotation thereof, and a plurality of slitters (13-1) installed at the rear of the stainless steel coil (11-1) to slit the large-width flat stainless steel sheet (100) supplied from the stainless steel coil supply roller (12-1) to the uncoiler (1) into a plurality of flat sheets, the slitters being installed in the lateral direction at intervals adjusted based on the width of the flat stainless steel sheet (100) corresponding to the outer diameter of a stainless steel pipe to be manufactured, the slitters being configured to slit the flat stainless steel sheet (100) such that opposite side surfaces of the flat stainless steel sheet have vertical planes, and wherein the embossed stainless steel pipe manufacturing apparatus further includes a curving adjustment means (30-1) installed between the embossing machine (3) and the pipe mill (4), the curving adjustment means (30-1) including a curving male roller (31-1), a curving female roller (32-1) disposed under the curving male roller (31-1), the curving female roller being spaced apart from the curving male roller (31-1) by a predetermined distance in the horizontal direction, a pair of rotary shaft support units (33-1) on left and right sides of the curving male roller (31-1) and the curving female roller (32-1), the rotary shaft support units being configured to support rotary shafts (31a-1, 32a-1) connected respectively to the curving male roller (31-1) and the curving female roller (32-1), and a fastening nut (34-1) formed at the upper end of each of the rotary shaft support units (33-1), the curving male roller (31-1) moving upwards and downwards by unfastening and fastening the fastening nuts (34-1), whereby the gap between the curving male roller (31-1) and the curving female roller (32-1), into which the embossed stainless steel sheet (100') is introduced, is adjusted.

[Mode for Invention]

Hereinafter, the technical construction of the present invention will be described in detail with reference to the drawings.

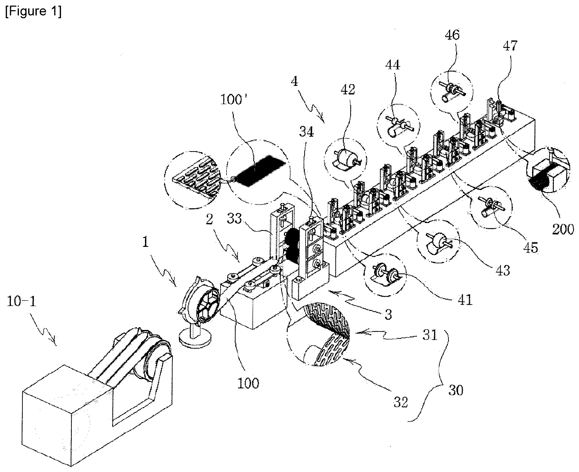

Embossed stainless steel pipe manufacturing apparatuses 1 shown in FIGS. 1 to 3 are embossed stainless steel pipe manufacturing apparatuses 1 according to first to third embodiments of the present invention that are different from each other depending on the addition of elements constituting the apparatuses.

The embossed stainless steel pipe manufacturing apparatus 1 according to the first embodiment of the present invention shown in FIG. 1 includes an uncoiler 1 configured to provide a flat stainless steel sheet 100, a centering guide roller 2 configured to guide the flat stainless steel sheet 100 supplied from the uncoiler 1 to an embossing machine 3

located at the rear thereof, the embossing machine 3 being configured to emboss the flat stainless steel sheet 100 supplied via the centering guide roller 2 in order to form an embossed stainless steel sheet 100', and a pipe mill 4 configured to curve and round the embossed stainless steel sheet 100' supplied through the embossing machine 3 in order to manufacture an embossed stainless steel pipe 200 having a weld seam portion 201 formed in the longitudinal direction, the pipe mill also being configured to weld the weld seam portion 201 of the embossed stainless steel pipe 200 manufactured as described above in order to complete the embossed stainless steel pipe 200. The embossing machine 3 includes an embossing press roller 30 including an upper roller 31 having a relief embossing pattern formed thereon and a lower roller 32 having an intaglio embossing pattern formed thereon, the upper roller and the lower roller being configured to be rotated in the state of being engaged with each other, a frame unit 33 defining the outer framework of the embossing machine, the frame unit being configured to support the embossing press roller 30, and a hydraulic cylinder 34 installed at the upper end of the frame unit 33. The upper roller 31 includes a roller body 311, rotary shafts 312 formed at the centers of opposite side surfaces of the roller body 311, a relief embossing pattern unit 313 formed on the surface of the roller body 311, and a band-shaped groove 314 formed on the surface of the roller body 311 in the rotational direction of the roller so as to be lower than the relief embossing pattern unit 313 in order to partition the relief embossing pattern unit 313 at predetermined intervals. The lower roller 32 includes a roller body 321, rotary shafts 322 formed at the centers of opposite side surfaces of the roller body 321, an intaglio embossing pattern unit 323 formed on the surface of the roller body 321, and a band-shaped protrusion 324 formed on the surface of the roller body 321 in the rotational direction of the roller so as to be higher than the intaglio embossing pattern unit 323 in order to partition the intaglio embossing pattern unit 323 at predetermined intervals. The protrusion 324 is configured to be inserted into the groove 314. The embossed stainless steel pipe manufacturing apparatus further includes a slitting machine 10-1 installed in front of the uncoiler 1 to slit a large-width flat stainless steel sheet into a plurality of flat sheets such that side surfaces of each of the slit flat stainless steel sheets 100 have vertical planes, wherein the slitting machine 10-1 includes a stainless steel coil 11-1 constituted by an uncut flat stainless steel sheet 100 in a state of being wound, a stainless steel coil supply roller 12-1 forming the central rotary axis of the stainless steel coil 11-1, the stainless steel coil supply roller being configured to supply the flat stainless steel sheet to the uncoiler 1 through rotation thereof, and a plurality of slitters 13-1 installed at the rear of the stainless steel coil 11-1 to slit the large-width flat stainless steel sheet 100 supplied from the stainless steel coil supply roller 12-1 to the uncoiler 1 into a plurality of flat sheets, the slitters being installed in the lateral direction at intervals adjusted based on the width of the flat stainless steel sheet 100 corresponding to the outer diameter of a stainless steel pipe to be manufactured, the slitters being configured to slit the flat stainless steel sheet 100 such that opposite side surfaces of the flat stainless steel sheet have vertical planes.

The embossed stainless steel pipe manufacturing apparatus 1 according to the first embodiment described above, which is configured to solve difficulty in setting the width of a flat stainless steel sheet corresponding to the outer diameter of an embossed stainless steel pipe to be finally manufactured, presents technology for slitting a large-width flat stainless steel sheet 100 into a plurality of flat sheets using a plurality of slitters 13-1 installed in the section in which the flat stainless steel sheet is slit depending on the outer diameter of the embossed stainless steel pipe.

At this time, opposite side surfaces of the flat stainless steel sheet 100 slit into a plurality of flat sheets by the slitting machine 10-1 have vertical planes.

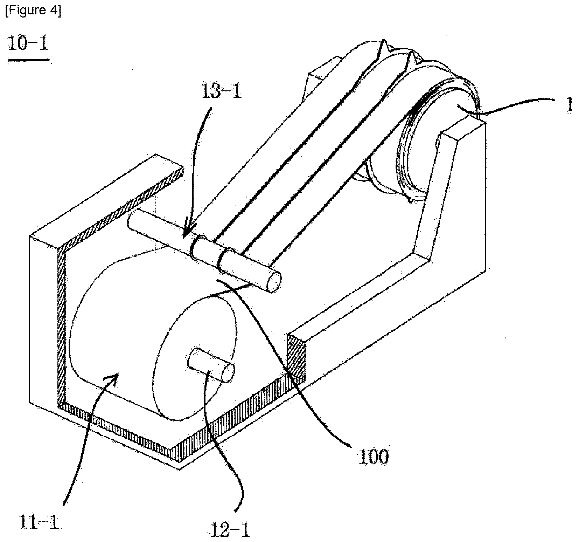

As shown in FIG. 4, the slitting machine 10-1 includes a stainless steel coil 11-1 constituted by an uncut flat stainless steel sheet 100 in a state of being wound, a stainless steel coil supply roller 12-1 forming the central rotary axis of the stainless steel coil 11-1, the stainless steel coil supply roller being configured to supply the flat stainless steel sheet to the uncoiler 1 through rotation thereof, and a plurality of slitters 13-1 installed at the rear of the stainless steel coil 11-1 to slit the large-width flat stainless steel sheet 100 supplied from the stainless steel coil supply roller 12-1 to the uncoiler 1 into a plurality of flat sheets, the slitters being installed in the lateral direction at intervals adjusted based on the width of the flat stainless steel sheet 100 corresponding to the outer diameter of a stainless steel pipe to be manufactured, the slitters being configured to slit the flat stainless steel sheet 100 such that opposite side surfaces of the flat stainless steel sheet have vertical planes.

The stainless steel coil 11-1 is constituted by a large-width flat stainless steel sheet before slitting in a state of being wound, and is supplied to the slitters 13-1 by rotation of the coil supply roller 12-1 forming the central rotary axis of the stainless steel coil 11-1, constituted by the large-width flat stainless steel sheet in the state of being wound.

The plurality of slitters 13-1 is installed at a shaft installed so as to be spaced apart from the stainless steel coil 11-1 by a predetermined distance in the state of being parallel to the lateral direction of the stainless steel coil 11-1 at the rear of the stainless steel coil 11-1.

The interval at which the slitters 13-1 are disposed is set depending on the outer diameter of an embossed stainless steel pipe to be manufactured.

The large-width flat stainless steel sheet 100 supplied from the stainless steel coil 11-1 is slit into a plurality of flat sheets based on the set value by the slitters 13-1, and the flat sheets are supplied to the uncoiler 1 so as to be wound therearound.

The slitting machine 10-1 requires precision and accuracy to the second decimal place in units of mm, in connection with dimensions of the outer diameter of an embossed stainless steel pipe.

In general, a flat stainless steel sheet is a band-shaped flat stainless steel sheet wound in the form of a coil, and is sold based on standards indicating width, thickness, and hardness.

That is, the flat stainless steel sheet is not sold based on dimensions capable of obtaining the outer diameter of a smooth stainless steel pipe or an embossed stainless steel pipe manufactured using a pipe mill, and therefore it is necessary to slit the flat stainless steel sheet in order to obtain a required width of the flat sheet.

A smooth metal pipe manufactured using the pipe mill is a metal pipe that has been produced prior to a metal pipe manufactured by melting and extruding metal and has a long history and accumulated technology. There is a formula (Equation 1) capable of obtaining the width of a flat stainless steel sheet necessary to obtain a predetermined diameter. This formula is provided to set the outer diameter of an embossed stainless steel pipe, and the "circular pipe slitting coil width" using this formula is shown in Table 1 below.

$$\text{(Outer diameter} - \text{thickness)}\pi + \text{thickness} = \text{width of flat stainless steel sheet necessary to obtain predetermined outer diameter of smooth stainless steel pipe} \quad \text{------ Equation 1}$$

As an example, when a smooth stainless steel pipe having an outer diameter of 30.00 mm is manufactured using a flat stainless steel sheet having a thickness of 1.0 mm, the required width of the flat stainless steel sheet is $(30.00 - 1.00) \times \pi + 1.00 = 92.06$ mm.

In the case in which the thickness and the outer diameter necessary when manufacturing a smooth stainless steel pipe are obtained, as described above, it is possible to easily set the required width of the flat stainless steel sheet. In the case in which an embossed stainless steel pipe is manufactured using a flat stainless steel sheet, however, it is not possible to know the width of the flat stainless steel sheet necessary when manufacturing an embossed stainless steel pipe having a predetermined thickness and a required outer diameter, it is not possible to set the width of the flat stainless steel sheet, and there is no formula like Equation 1.

The reason is that Korean, US, and Japanese patent publications were searched in order to acquire reference materials necessary to determine novelty and necessary for development at the initial stage of developing an embossed stainless steel pipe from an embossed metal sheet using the pipe mill, the result of search revealed that there is no material related to manufacture of an embossed stainless steel pipe using the pipe mill, and manufacture of an embossed stainless steel pipe using the pipe mill was technology attempted for the first time.

Even Korean Registered Patent No. 10-1868064, which is a prior registered patent of the applicant of the present application, could not solve the above problem. As a result, new standards (outer diameters) of embossed stainless steel pipes having embossing patterns having predetermined thicknesses and widths were manufactured one by one and the results were accumulated as materials for standards. In this system, however, loss of raw materials is high, power consumption is high, and labor costs are high. Therefore, a method of setting the width of a flat stainless steel sheet suitable for manufacturing an embossed stainless steel pipe is needed.

To this end, in the present invention, the slitting machine 10-1 is disposed in front of the uncoiler 1, whereby a uniform principle for setting the width of a flat stainless steel sheet suitable for obtaining an embossed stainless steel pipe having a predetermined outer diameter is derived, and therefore it is possible to reduce unnecessary operation of the apparatus, to save the raw materials of a flat stainless steel sheet, and to reduce labor costs.

The width of a flat stainless steel sheet necessary for obtaining the outer diameter of a smooth stainless steel pipe is shown in Table 1 as "circular pipe slitting coil width."

[Table 1]

| Circular pipe (smooth pipe) slitting coil width (unit: mm) | | | | | | | |
|---|---|---|---|---|---|---|---|
| Outer diameter of circular pipe/ Thickness of flat stainless steel sheet | 0.50 | 1. 00 | 1.50 | 2.00 | 2.50 | 3.00 | 3.50 |
| 9.60 | 29.10 | 28.00 | 26.93 | 25.86 | - | - | - |
| 10.00 | 30.33 | 29.26 | 28.19 | 27.12 | 26.05 | - | - |
| 12.70 | 38.80 | 37.70 | 36.67 | 35.60 | 34.53 | - | - |

(continued)

| Circular pipe (smooth pipe) slitting coil width (unit: mm) | | | | | | | |
|---|---|---|---|---|---|---|---|
| 15.00 | 46.03 | 44.96 | 43.89 | 12.82 | 41.75 | - | - |
| 19.10 | 58.90 | 57.80 | 56.80 | 55.70 | 54.62 | - | - |
| 20.00 | 61.73 | 60.66 | 59.59 | 58.52 | 57.45 | 56.38 | - |
| 22.30 | 68.95 | 67.90 | 66.80 | 65.80 | 64.70 | 63.60 | - |
| 25.00 | 77.43 | 76.36 | 75.29 | 74.22 | 73.15 | 72.08 | - |
| 25.40 | 78.69 | 77.60 | 76.50 | 75.50 | 74.40 | 73.34 | - |
| 27.20 | 84.34 | 83.30 | 82.20 | 81.10 | 80.06 | 78.99 | - |
| 30.00 | 93.13 | 92.06 | 90.99 | 89.92 | 88.85 | 87 .78 | - |
| 31. 8 | - | 97.70 | 96.60 | 95.60 | 94.50 | 93.43 | - |
| 34.00 | - | 104.60 | 103.60 | 102.50 | 101.40 | 100.34 | - |
| 35.00 | - | 107.76 | 106.70 | 105.60 | 104.60 | 103.50 | - |
| 40.00 | - | 123.50 | 122.40 | 121.30 | 120.30 | 119.20 | - |
| 50.00 | - | 154.90 | 153.80 | 152.70 | 151.70 | 150.60 | 149.50 |
| 55.00 | - | 170.60 | 169.50 | 168.40 | 166.90 | 166.30 | 165.20 |
| 60.00 | - | 186.30 | 185.20 | 184.10 | 183.10 | 182.00 | 180.90 |
| 70.00 | - | 217.70 | 216.60 | 215.50 | 214.50 | 213.40 | 212.30 |
| 80.00 | - | 249.10 | 248.00 | 246.90 | 245.90 | 244.80 | 243.70 |

Table 1 above is a table for setting the width of a flat stainless steel sheet necessary for obtaining a predetermined outer diameter of a smooth stainless steel pipe manufactured from a flat stainless steel sheet having a predetermined thickness. As an example, in the case in which a smooth stainless steel pipe having an outer diameter of 10.00 mm is manufactured from a flat stainless steel sheet having a thickness of 1.0 mm using the pipe mill, (10.00 - 1.00) $\times$ 3.14 + 1.00 = 29.26 mm according to the above formula, (outer diameter - thickness) + thickness = required width of flat stainless steel sheet, as a method of calculating the required width of a flat stainless steel sheet having a thickness of 1.0 mm.

In other words, the width of a flat stainless steel sheet necessary for obtaining a smooth stainless steel pipe having an outer diameter of 10.00 mm using the pipe mill from an embossed stainless steel sheet having an embossed height of 0.5 mm obtained by embossing a flat stainless steel sheet having a thickness of 1.0 mm is 29.26 mm.

Next, the width of a flat stainless steel sheet necessary to obtain a predetermined outer diameter of an embossed stainless steel pipe is shown in Table 2 as "embossed stainless steel pipe slitting coil width."

[Table 2]

| Embossed stainless steel pipe slitting coil width (unit: mm) | | | | | | | | | | | |
|---|---|---|---|---|---|---|---|---|---|---|---|
| Thickness (mm) | | 0.90 | | 1. 00 | | 1. 10 | | 1. 50 | | 2.00 | |
| Embossing pattern | Outer diameter/ Required width | SP | ESP | SP | ESP | SP | ESP | SP | ESP | SP | ESP |
| Diamond | 25.40 | 77.8 | 77.4 | - | - | - | - | - | - | - | - |
| | 31.75 | 97.8 | 97.4 | - | - | - | - | - | - | - | - |
| | 38.10 | - | - | - | - | 117.3 | 116.7 | - | - | - | - |
| | 50.80 | - | - | 157.4 | 157.9 | - | - | 156.3 | 155 | - | - |
| Comb | 25.40 | 77.8 | 77.4 | - | - | - | - | - | - | - | - |
| | 31.75 | 97.8 | 97.4 | - | - | - | - | - | - | - | - |
| | 38.10 | - | - | - | - | 117.3 | 116.7 | - | - | - | - |
| | 50.80 | - | - | - | - | - | - | 156.3 | 155 | - | - |
| Flower | 31.75 | 97.8 | 97.4 | - | - | - | - | - | - | - | - |
| Quadrangle | 38.10 | - | 157.4 | 157.9 | - | 117.3 | 116.9 | - | - | - | - |
| Stripe | - | - | - | - | - | - | - | - | - | - | - |

(In Table 2, SP indicates the width of a flat stainless steel sheet necessary for a predetermined outer diameter of a smooth stainless steel pipe, and ESP indicates the width of a flat stainless steel sheet necessary for a predetermined outer diameter of an embossed stainless steel pipe. In Table 2, the embossed height is 0.5 mm.) In the present invention, it has been found that it is possible to use the same slitting width under the following conditions although embossed patterns are different from each other based on synthetic examination of technology accumulated while various standards of stainless steel pipes are manufactured and continuous research on the state in which the outer diameters, the inner diameters, and embossed patterns of products are changed during multi-stage processes in order to set a more efficient slitting width.

In the case in which an embossed stainless steel pipe is manufactured using an embossed stainless steel sheet that is formed using a flat stainless steel sheet having the same thickness, has the same embossed height, and has an embossed pattern formed on the outer surface thereof in a dense state, the slitting width preset irrespective of the shape of the embossed pattern may be applied irrespective of the kind of the embossed pattern.

That is, in determining the slitting width of a flat stainless steel sheet to be used for an embossed stainless steel pipe having an outer diameter to be manufactured, the slitting width of a flat stainless steel sheet 100 may be uniformly maintained as long as all of the following conditions are satisfied even in the case in which embossed patterns are different from each other:

first, a flat stainless steel sheet 100 having the same thickness;
second, an embossed stainless steel sheet 100' having the same embossed height formed using the flat stainless steel sheet 100 having the same thickness; and
third, an embossed pattern formed on the outer surface of the embossed stainless steel sheet 100' in a dense state.

If the above conditions are satisfied, therefore, a process of manufacturing a sample necessary to obtain an embossed stainless steel pipe having an outer diameter to be manufactured is not needed even in the case in which a new embossed pattern is applied, whereby it is possible solve problems, such as power consumption due to unnecessary operation of the apparatus, waste of resources, and waste of manpower.

As an example, in Table 2, the width of a flat stainless steel sheet used to manufacture an embossed stainless steel pipe having a diamond-shaped (quadrangular pyramidal) embossed pattern formed thereon and having an outer diameter ø of 25.4 mm is 77.4 mm.

In the case in which an embossed stainless steel pipe having the same outer diameter as the embossed stainless steel pipe having the diamond-shaped (quadrangular pyramidal) embossed pattern and having a pattern different therefrom is manufactured, the width of a flat stainless steel sheet is set to 77.4 mm suggested above as long as the thickness of the flat stainless steel sheet is the same, the embossed height is the same, and the embossed pattern is formed on the outer surface of an embossed stainless steel sheet in a dense state. As a result, it is possible to manufacture an embossed stainless steel pipe having an outer diameter ø of 25.4 mm with a different pattern.

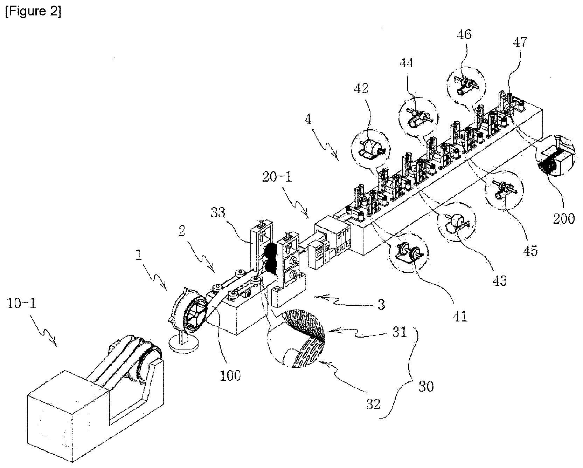

As shown in FIG. 2, the embossed stainless steel pipe manufacturing apparatus 1 according to the second embodiment of the present invention further includes a tempering electric furnace 20-1 in addition to the components of the embossed stainless steel pipe manufacturing apparatus 1 shown in FIG. 1.

In the embossed stainless steel pipe manufacturing apparatus 1, the tempering electric furnace 20-1 is installed between the embossing machine 3 and the pipe mill 4, and tempers a flat stainless steel sheet having a large thickness of 2.5 to 5.0 mm and exhibiting hardness increased by embossing to reduce the hardness of the flat stainless steel sheet to hardness before embossing such that an embossed stainless steel sheet 100' having a large thickness of 2.5 to 5.0 mm can be smoothly curved and rounded by the pipe mill 4.

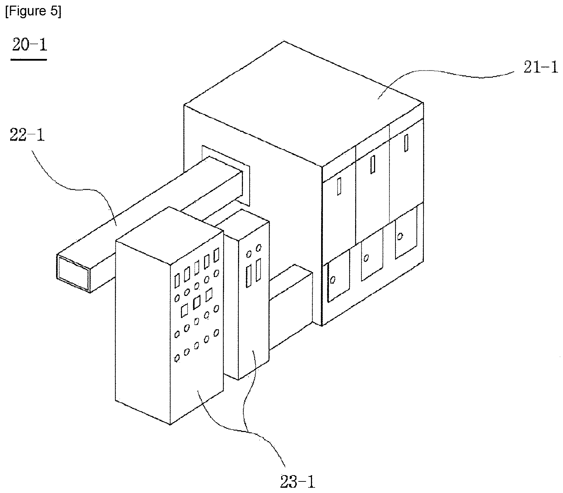

As shown in Fig. 5, the tempering electric furnace 20-1 includes an electric furnace 21-1, a tunnel type introduction unit 22-1 configured to supply an embossed stainless steel sheet 100' to the electric furnace 21-1, and a controller 23-1 configured to control the temperature and time of the electric furnace 21-1.

The tempering electric furnace 20-1 is installed between the embossing machine 3 and the pipe mill 4, and is used in the case in which the thickness of a flat stainless steel sheet 100 is 2.5 mm or more.

The tempering electric furnace 20-1 tempers a flat stainless steel sheet 100 having a large thickness and exhibiting hardness increased by embossing to reduce the hardness of the flat stainless steel sheet to hardness before embossing.

In the tempering electric furnace 20-1, tempering is performed at a temperature of 600 to 1,300°C for 1 to 15 minutes.

In the case in which an embossed stainless steel pipe is manufactured using a flat stainless steel sheet 100 having a large thickness of 2.5 mm or more, tensile strength and bending strength of the flat stainless steel sheet greatly increase due to the hardness of the flat stainless steel sheet increased by embossing in addition to the large thickness thereof, whereby the flat stainless steel sheet is not smoothly curved and rounded by the pipe mill, and therefore defective embossed stainless steel pipes are produced in large quantities.

For this reason, a flat stainless steel sheet 100 having a large thickness of 2.5 mm or more is tempered by the tempering electric furnace 20-1 installed in front of the pipe mill 4, whereby the hardness of the flat stainless steel sheet is reduced to hardness before embossing. As a result, the flat stainless steel sheet is smoothly curved and rounded by the pipe mill, and therefore it is possible to obtain a high-quality embossed stainless steel pipe using a flat stainless steel sheet 100 having a large thickness of 2.5 mm or more.

Specifically, the flat stainless steel sheet 100 having the large thickness has a thickness ranging from 2.5 mm to 5.0 mm.

For embossing, a flat stainless steel sheet 100 having a hardness of 100 to 200 HV while having a thickness of 2.5 mm to 5.0 mm is used.

After embossing, tensile strength and bending strength of the flat stainless steel sheet 100 having the above hardness 40 to 50% more increases due to structural reinforcement based on an embossed pattern formed thereon. As a result, the overall hardness of the flat stainless steel sheet increases to a maximum of 300 HV, which makes it difficult to curve and round the flat stainless steel sheet through the pipe mill 40.

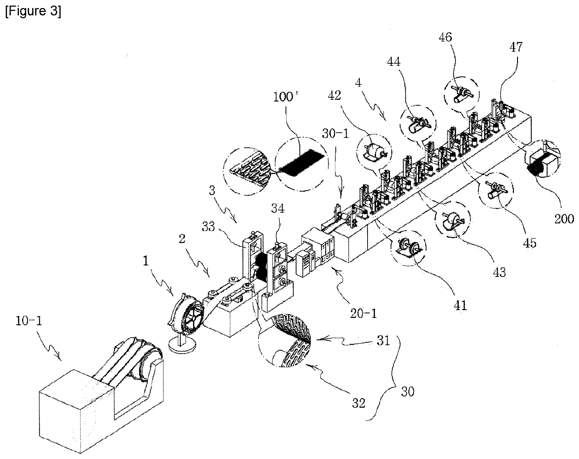

As shown in FIG. 3, the embossed stainless steel pipe manufacturing apparatus 1 according to the third embodiment of the present invention further includes a curving adjustment means 30-1 in addition to the components of the embossed stainless steel pipe manufacturing apparatus 1 shown in FIG. 2.

More specifically, the curving adjustment means is installed between the embossing machine 3 and the pipe mill 4, and is installed in front or the rear of the tempering electric furnace 20-1.

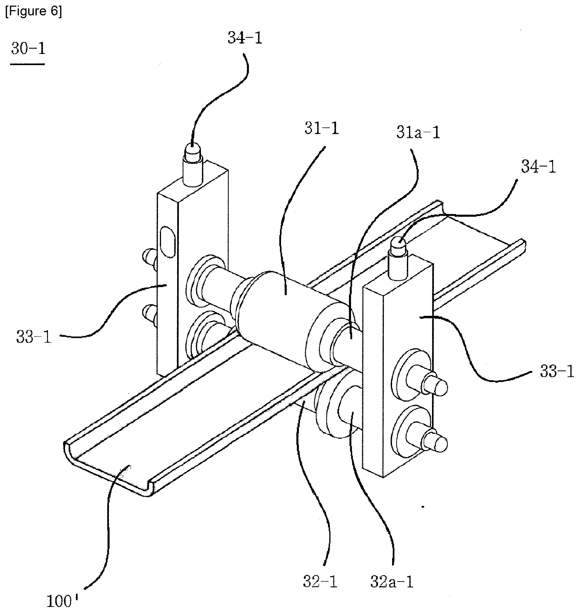

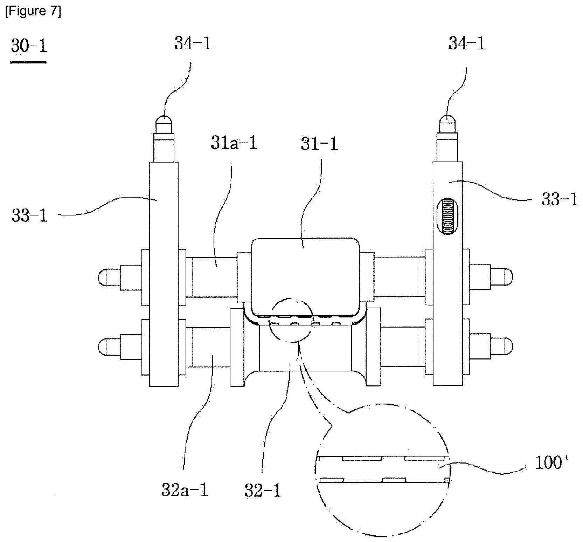

As shown in FIGS. 6 and 7, the curving adjustment means 30-1 includes a curving male roller 31-1, a curving female roller 32-1 disposed under the curving male roller 31-1, the curving female roller being spaced apart from the curving male roller 31-1 by a predetermined distance in the horizontal direction, a pair of rotary shaft support units 33-1 on left and right sides of the curving male roller 31-1 and the curving female roller 32-1, the rotary shaft support units being configured to support rotary shafts 31a-1 and 32a-1 connected respectively to the curving male roller 31-1 and the curving female roller 32-1, and a fastening nut 34-1 formed at the upper end of each of the rotary shaft support units 33-1, wherein the curving male roller 31-1 moves upwards and downwards by unfastening and fastening the fastening nuts 34-1, whereby the gap between the curving male roller 31-1 and the curving female roller 32-1, into which the embossed stainless steel sheet 100' is introduced, is adjusted.

An embossed stainless steel sheet, formed by embossing in the previous process, is introduced between the curving male roller 31-1 and the curving female roller 32-1 of the curving adjustment means 30-1, the gap between curving male roller and the curving female roller is adjusted, and the embossed stainless steel sheet is curved and rounded by the pipe mill 4.

When curving and rounding are performed through the pipe mill 4, in the case in which the gap between curving male roller and the curving female roller is too large, the curving rollers idle, whereby a series of apparatuses under the same process flow may have trouble. In the case in which the gap between the curving male roller and the curving female roller is too small, a relief embossed pattern formed on the embossed stainless steel sheet may be scratched or aggregated. For these reasons, it is very important to adjust the gap between the curving male roller and the curving female roller.

The embossed stainless steel sheet 100' exhibits elasticity in the upward-downward direction due to the embossed pattern formed thereon, unlike a flat stainless steel sheet. In consideration thereof, in the state in which the outer surface of the embossed stainless steel sheet 100' abuts the curving female roller 32-1 and the inner surface of the embossed stainless steel sheet 100' abuts the curving male roller 31-1, the gap between the curving male roller and the curving female roller is reduced by a size corresponding to 10 to 15% the embossed height after the curving male roller 31-1 and the curving female roller 32-1 come into tight contact with the embossed stainless steel sheet due to weight of the curving male roller 31-1.

After the gap adjustment is performed as described above, the curving and rounding processes using the pipe mill 4 are performed.

Next, a description will be given of the embossing press roller 30 configured to form an embossed pattern on a flat stainless steel sheet having a width adjusted through the slitting machine 10-1 using the upper roller 31 having the relief embossing pattern formed thereon and the lower roller 32 having the intaglio embossing pattern formed thereon, the upper roller and the lower roller being configured to be rotated in the state of being engaged with each other.

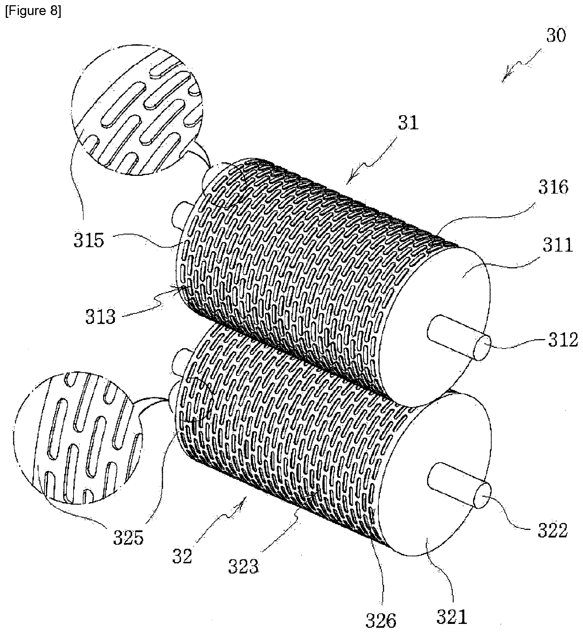

FIGS. 8 to 14 show various embodiments of the embossing press roller 30, which may be classified into six embodiments depending on the shape and structure thereof.

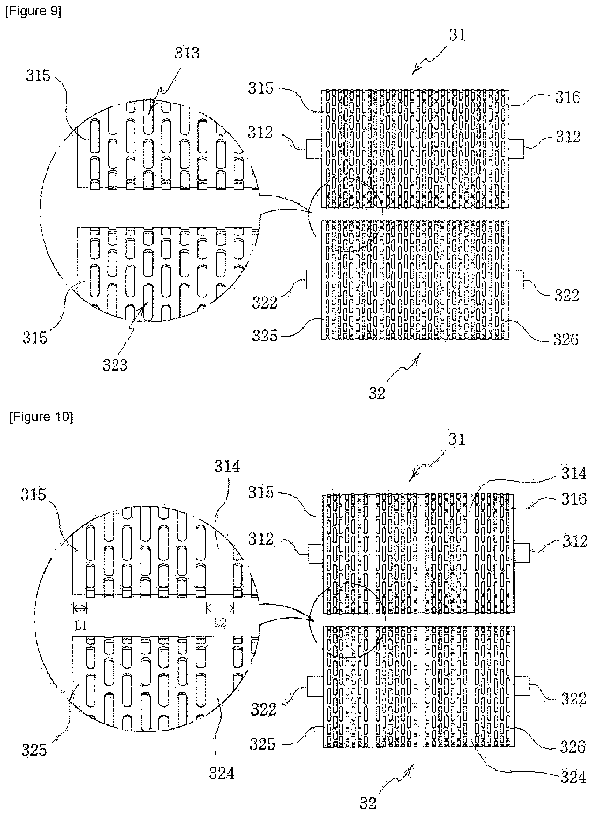

The embossing press roller 30 shown in FIGS. 8 and 9 is the first embodiment.

The embossing press roller 30 includes an upper roller 31 including a roller body 311, rotary shafts 312 formed at the centers of opposite side surfaces of the roller body 311, a relief embossing pattern unit 313 formed on the surface of the roller body 311, and first left and right ends 315 and 316 formed along opposite side edges of the roller body 311 so as to be lower than the relief embossing pattern unit 313, and a lower roller 32 including a roller body 321, rotary shafts 322 formed at the centers of opposite side surfaces of the roller body 321, an intaglio embossing pattern unit 323

formed on the surface of the roller body 321, and second left and right ends 325 and 326 formed along opposite side edges of the roller body 321 so as to be higher than the intaglio embossing pattern unit 323.

The upper roller 31 and the lower roller 32 according to the first embodiment are not provided with a band-shaped groove 314 configured to partition the relief embossing pattern unit 313 and a band-shaped protrusion 324 configured to partition the intaglio embossing pattern unit 323, respectively.

The upper roller 31 and the lower roller 32 according to the second embodiment shown in FIG. 10 are provided with a band-shaped groove 314 configured to partition the relief embossing pattern unit 313 and a band-shaped protrusion 324 configured to partition the intaglio embossing pattern unit 323, respectively.

The embossing press roller 30 according to the second embodiment includes an upper roller 31 including a roller body 311, rotary shafts 312 formed at the centers of opposite side surfaces of the roller body 311, a relief embossing pattern unit 313 formed on the surface of the roller body 311, a band-shaped groove 314 formed on the surface of the roller body 311 in the rotational direction of the roller so as to be lower than the relief embossing pattern unit 313 in order to partition the relief embossing pattern unit 313 at predetermined intervals, and first left and right ends 315 and 316 formed along opposite side edges of the roller body 311 so as to be lower than the relief embossing pattern unit 313, and a lower roller 32 including a roller body 321, rotary shafts 322 formed at the centers of opposite side surfaces of the roller body 321, an intaglio embossing pattern unit 323 formed on the surface of the roller body 321, a band-shaped protrusion 324 formed on the surface of the roller body 321 in the rotational direction of the roller so as to be higher than the intaglio embossing pattern unit 323 in order to partition the intaglio embossing pattern unit 323 at predetermined intervals, and second left and right ends 325 and 326 formed along opposite side edges of the roller body 321 so as to be higher than the intaglio embossing pattern unit 323.

The protrusion 324 of the lower roller 32 is configured to be inserted into the groove 314 of the upper roller 31.

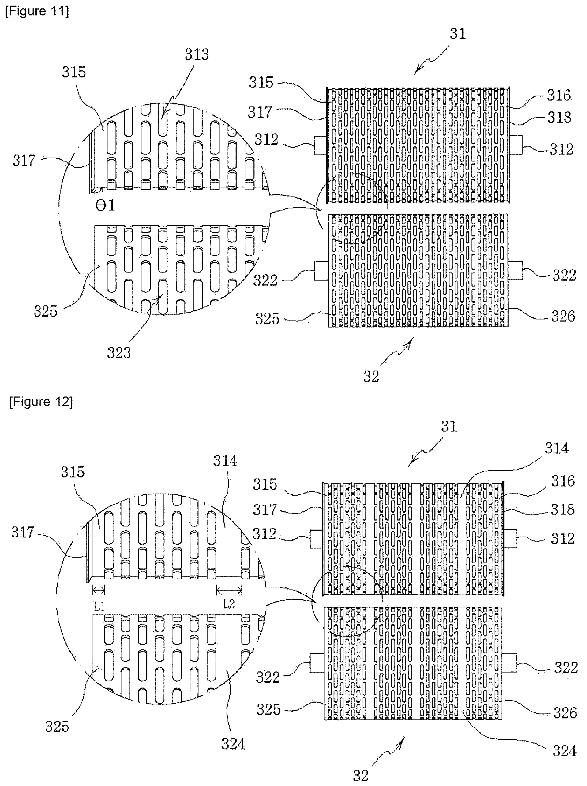

The embossing press roller 30 according to the third embodiment is different from the embossing press roller 30 according to each of the first and second embodiments in terms of the structure of opposite side ends of the roller body 311 of the upper roller 31. That is, left and right inclined surface formation portions 317 and 318 are formed at opposite side ends of the roller body 311 of the upper roller 31 constituting the embossing press roller 30 according to the third embodiment. FIG. 11 shows the embossing press roller 30 according to the third embodiment.

The embossing press roller 30 according to the third embodiment includes an upper roller 31 including a roller body 311, rotary shafts 312 formed at the centers of opposite side surfaces of the roller body 311, a relief embossing pattern unit 313 formed on the surface of the roller body 311, first left and right ends 315 and 316 formed along opposite side edges of the roller body 311 so as to be lower than the relief embossing pattern unit 313, and left and right inclined surface formation portions 317 and 318 extending outwards from the first left and right ends 315 and 316 in the lateral direction so as to be integrally formed therewith, the left and right inclined surface formation portions protruding outwards from points extending from the first left and right ends 315 and 316 in the oblique direction, the left and right inclined surface formation portions being rotated in the state of being engaged with second left and right ends 325 and 326 of a lower roller 32 to shape opposite side surfaces of the flat metal sheet 100 in the oblique direction, and a lower roller 32 including a roller body 321, rotary shafts 322 formed at the centers of opposite side surfaces of the roller body 321, an intaglio embossing pattern unit 323 formed on the surface of the roller body 321, and second left and right ends 325 and 326 formed along opposite side edges of the roller body 321 so as to be higher than the intaglio embossing pattern unit 323.

The upper roller 31 and the lower roller 32 according to the third embodiment are not provided with a band-shaped groove 314 configured to partition the relief embossing pattern unit 313 and a band-shaped protrusion 324 configured to partition the intaglio embossing pattern unit 323, respectively.

The upper roller 31 and the lower roller 32 according to the fourth embodiment shown in FIG. 12 are provided with a band-shaped groove 314 configured to partition the relief embossing pattern unit 313 and a band-shaped protrusion 324 configured to partition the intaglio embossing pattern unit 323, respectively.

The embossing press roller 30 according to the fourth embodiment includes an upper roller 31 including a roller body 311, rotary shafts 312 formed at the centers of opposite side surfaces of the roller body 311, a relief embossing pattern unit 313 formed on the surface of the roller body 311, a band-shaped groove 314 formed on the surface of the roller body 311 in the rotational direction of the roller so as to be lower than the relief embossing pattern unit 313 in order to partition the relief embossing pattern unit 313 at predetermined intervals, first left and right ends 315 and 316 formed along opposite side edges of the roller body 311 so as to be lower than the relief embossing pattern unit 313, and left and right inclined surface formation portions 317 and 318 extending outwards from the first left and right ends 315 and 316 in the lateral direction so as to be integrally formed therewith, the left and right inclined surface formation portions protruding outwards from points extending from the first left and right ends 315 and 316 in the oblique direction, the left and right inclined surface formation portions being rotated in the state of being engaged with second left and right ends 325 and 326 of a lower roller 32 to shape opposite side surfaces of the flat metal sheet 100 in the oblique direction, and a lower roller 32 including a roller body 321, rotary shafts 322 formed at the centers of opposite side surfaces of the roller body 321, an intaglio embossing pattern unit 323 formed on the surface of the roller body 321, a band-shaped protrusion 324 formed on the surface of the roller body 321 in the rotational direction of the roller so as to be higher than the intaglio embossing pattern unit 323 in order to partition the intaglio embossing pattern unit 323 at predetermined intervals, and second left and right ends 325 and 326 formed along opposite side edges of the roller body 321 so as to be higher than the intaglio embossing pattern unit 323.

The embossing press roller 30 according to each of the fifth and sixth embodiments has an embossing pattern different from the embossing pattern of the embossing press roller 30 according to each of the first to fourth embodiments.

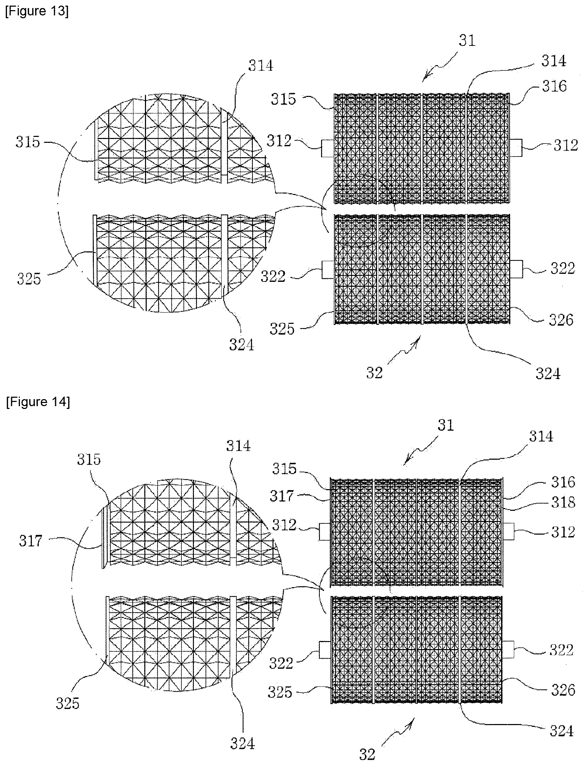

As shown in FIG. 13, the embossing press roller 30 according to the fifth embodiment has substantially the same structure as the embossing press roller 30 according to the second embodiment except for the embossing pattern.

As shown in FIG. 14, the embossing press roller 30 according to the sixth embodiment has substantially the same structure as the embossing press roller 30 according to the fourth embodiment except for the embossing pattern.

Hereinafter, the construction of the respective components of the embossing press roller 30 according to each of the first to sixth embodiments will be described in more detail.

The embossing press roller 30 is configured such that the upper roller 31 and the lower roller 32, each of which is made of a high-rigidity metal material, are rotated in the state of being engaged with each other.

A pattern constituting the relief embossing pattern unit 313 and a pattern constituting the intaglio embossing pattern unit 323 are formed on the surface of the upper roller 31 and the surface of the lower roller 32, respectively, and the relief embossing pattern unit 313 and the intaglio embossing pattern unit 323 are formed so as to be engaged with each other.

The pattern harmonizes with relief and intaglio volumes and thus has a direct influence on the aesthetics of the embossed metal sheet. The pattern may be selected depending on taste.

As concrete examples, each of the embossing pattern units 313 and 323 shown in FIGS. 8 to 11 has a long rectangular pattern with round ends, and each of the embossing pattern units 313 and 323 shown in FIGS. 13 and 14 has a pattern with a quadrangular pyramidal protrusion.

The embossing press roller 30 according to each of the first and third embodiments shown in FIGS. 9 and 22 and the embossing press roller 30 according to each of the fifth and sixth embodiments shown in FIGS. 13 and 14 are different from each other in terms of whether the small-width band-shaped groove 314 and the small-width band-shaped protrusion 324 are formed on the upper roller 31 and the lower roller 32, respectively.

The band-shaped groove 314 and the band-shaped protrusion 324 are configured to be rotated in the state of being engaged with each other when the upper roller 31 and the lower roller 32 are rotated in the state in which the flat metal sheet 100 is interposed therebetween. That the band-shaped groove 314 and the band-shaped protrusion 324 are rotated in the state of being engaged with each other means that the band-shaped protrusion 324 pushes the metal sheet into the groove 314 during rotation thereof.

An embossing pattern is partitioned along the circumferential surface of each of the upper roller and the lower roller at predetermined intervals by a corresponding one of the small-width band-shaped groove 314 and the small-width band-shaped protrusion 324 formed as described above, and a decorative effect may be provided together with the embossing pattern by the small-width groove 314 partitioned as described above.

The embossing press roller 30 according to the present invention is characterized by the first left and right ends 315 and 316 and the second left and right ends 325 and 326 formed respectively at the opposite side ends of the upper roller 31 and the lower roller 32, as shown in FIGs. 8 to 14.

The first left and right ends 315 and 316 and the second left and right ends 325 and 326 are important in solving a welding problem that occurs at the time of manufacture of the embossed stainless steel pipe 200 using the embossed metal sheet 100'.

That is, the first left and right ends 315 and 316 and the second left and right ends 325 and 326 formed at the opposite side ends of the embossing press roller 30 provide small-width planes to opposite side surfaces of the embossed metal sheet, whereby it is possible to solve a problem in that, at the time of manufacture of the embossed stainless steel pipe using a conventional pipe mill configured to manufacture a smooth metal pipe, a concave-convex embossed pattern formed on the embossed metal sheet is deformed or welding is impossible due to mismatch of the concave-convex embossed pattern formed at the seam portion in the longitudinal direction.

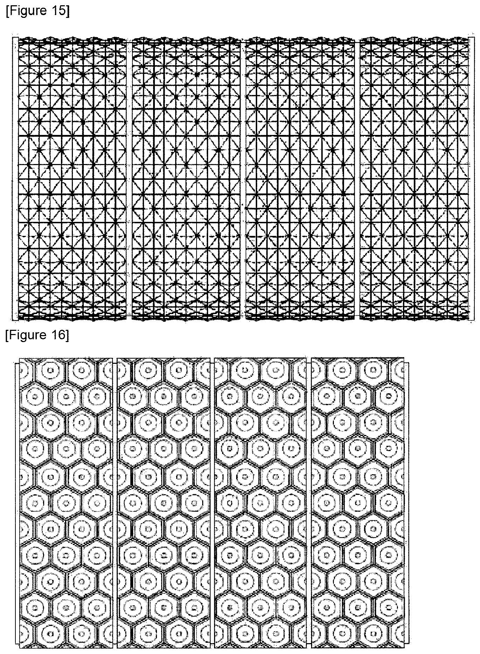

FIGS. 15 to 17 show various embossing patterns that may be formed on the embossing press roller 30 according to the present invention. Although flat stainless steel sheets have the same width so as be used to manufacture stainless steel pipes having the same outer diameter, different embossing patterns may be applied to the flat stainless steel sheets.

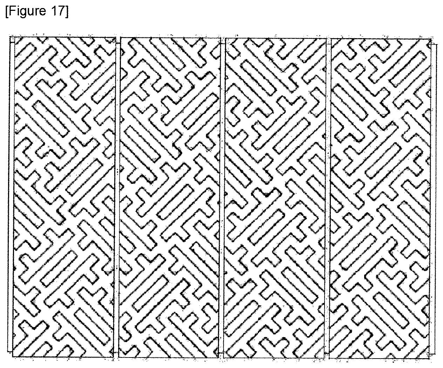

FIG. 15 shows a quadrangular pyramidal embossing pattern, FIG. 16 shows a regular hexagonal embossing pattern, and FIG. 17 shows a comb-shaped embossing pattern. In addition, various outer embossing patterns, such as a temple-shaped embossing pattern, may be provided.

As a concrete example of the outer diameter of a pipe and the width of a flat stainless steel sheet to which the above embossing patterns are applied, the outer diameter of the pipe is 25.4 mm, and the width of the flat stainless steel sheet necessary to obtain the pipe having the above outer diameter is 77.4 mm. Of course, the thickness of the flat sheet and the embossed height are also the same.

Hereinafter, an embossed stainless steel pipe manufacturing method according to the present invention will be described.

The embossed stainless steel pipe manufacturing method according to the present invention may be classified into first to third embodiments.

The embossed stainless steel pipe manufacturing method according to the first embodiment includes a first step of supplying a flat stainless steel sheet 100 to the embossing machine 3 from the uncoiler 1 via the centering guide roller 2, a second step of embossing the flat stainless steel sheet 100 using the embossing press roller 30 of the embossing machine 3 to form an embossed stainless steel sheet 100', and a third step of supplying the embossed stainless steel sheet 100' to the pipe mill 4 to manufacture an embossed stainless steel pipe 200 having a weld seam portion 201 formed in the longitudinal direction through curving and rounding processes and welding the weld seam portion 201 of the embossed stainless steel pipe 200 to complete the embossed stainless steel pipe 200, wherein the embossed stainless steel sheet 100' has an embossed structure formed on the outer surface thereof, small-width planes are formed at opposite side edges of the embossed stainless steel sheet, opposite side surfaces of the embossed stainless steel sheet 100' are brought into contact with each other through the curving and rounding processes of the pipe mill 4, whereby the weld seam portion 201 is formed so as to have a V-shaped groove 201a, and the V-shaped groove 201a is melted and fused by welding, whereby the embossed stainless steel pipe 200 is completed, and wherein the embossed stainless steel pipe manufacturing method further includes, as a pre-process of the first step, setting the width of a flat stainless steel sheet necessary to obtain the outer diameter of an embossed stainless steel pipe to be produced, disposing the slitters 13-1 of the slitting machine 10-1 according to the width of the flat stainless steel sheet, and slitting a large-width flat stainless steel sheet 100 supplied from the stainless steel coil supply roller 12-1 to the uncoiler 1 into a plurality of flat sheets according to the set width using the slitting machine 10-1 such that opposite side surfaces of the flat stainless steel sheet 100 have vertical planes.

The embossed stainless steel pipe manufacturing method according to the second embodiment is characterized in that, between the second step and the third step, a process of adjusting the gap between the curving male roller 31-1 and the curving female roller 32-1 of the curving adjustment means 30-1, between which an embossed stainless steel sheet 100' is inserted, to reduce the embossed height of the embossed stainless steel sheet 100' by 10 to 15% is further included in addition to all of the processes of the embossed stainless steel pipe manufacturing method according to the first embodiment.

The embossed stainless steel pipe manufacturing method according to the second embodiment is characterized in that, between the second step and the third step, a tempering process using the tempering electric furnace 20-1 under a condition in which the thickness of a flat stainless steel sheet 100 is 2.5 mm or more is further included in addition to all of the processes of the embossed stainless steel pipe manufacturing method according to the second embodiment.

At this time, tempering is performed at a temperature of 600 to 1,300°C for 1 to 15 minutes.

In the first to third embodiments, after passing through all of the processes before curving and rounding by the pipe mill 4, the embossed stainless steel sheet 100' is provided with a V-shaped groove 201a in the state in which small-width planes formed at the vertical ends thereof in the longitudinal direction are matched with each other as the result of curving and rounding, and at the same time a weld seam portion 201 is formed. The V-shaped groove 201a is melted and fused by welding using the same material, whereby an embossed stainless steel pipe according to the present invention is completed.

The process of manufacturing the embossed stainless steel pipe according to the present invention described above will be described based on concrete examples.

In the case in which an embossed stainless steel pipe having an embossed pattern, such as a quadrangular pattern or a comb-shaped pattern, a thickness of 1.1 mm, an embossed height of 0.5 mm, and an outer diameter of the embossed pattern of 38.1 mm is manufactured, the embossed stainless steel pipe is manufactured through the following processes.

Data about an embossed stainless steel pipe having a diamond-shaped (quadrangular pyramidal) embossed pattern formed thereon, a thickness of 1.1 mm, an embossed height of 0.5 mm, and an outer diameter of the embossed pattern of 38.10 mm are searched from Table 2 in consideration of the embossed height first, and then the width of a flat stainless steel sheet 100 used to manufacture the diamond-shaped (quadrangular pyramidal) embossed stainless steel pipe is searched. The width is 116.7 mm.

The quadrangular embossed pattern or the comb-shaped embossed pattern is compared with the diamond-shaped (quadrangular pyramidal) embossed pattern in terms of disposition, density, and size thereof in order to determine whether it is appropriate to adopt the width of the flat stainless steel sheet used to manufacture the diamond-shaped (quadrangular pyramidal) embossed stainless steel pipe.

Upon determining that such adoption is appropriate, a large-width flat stainless steel coil is slit into a plurality of flat stainless steel sheets having a width of 116.6 mm and having precisely vertically cut opposite side surfaces.

The flat stainless steel sheet 100 slit as described above is embossed using an embossing roller having a quadrangular embossed pattern or a comb-shaped embossed pattern, and is introduced into the curving adjustment means 30-1. The gap between the rollers of the curving adjustment means is reduced by 0.1 mm in the state in which the embossed stainless steel sheet is in tight contact with the curving adjustment means. Subsequently, the embossed stainless steel sheet is curved and rounded by the pipe mill 4, and a seam portion and a V-shaped groove formed as the result of matching between small-width planar ends of the rounded stainless steel sheet is melted and fused by argon welding using the same material, whereby an embossed stainless steel pipe is completed.

The standards of the quadrangular embossed pipe and the comb-shaped embossed pipe manufactured through the above processes are shown in Table 3 below.

[Table 3]

| Item/Classification | Quadrangular embossed pipe | Comb-shaped embossed pipe |
|---|---|---|
| Outer diameter (mm) | 38.10 | 38.11 |
| Width of seam portion | 1.2 mm | 1.2 mm |
| Upper end width of V-shaped groove | 0.8 | 0.8 |

[Industrial Applicability]

In an embossed stainless steel pipe manufacturing apparatus according to the present invention and an embossed stainless steel pipe manufacturing method using the same, it is possible to manufacture a flat stainless steel sheet having a width corresponding to the outer diameter of an embossed stainless steel pipe through a slitting machine configured to accurately vertically cut the flat stainless steel sheet and to manufacture a high-quality embossed stainless steel pipe using such a flat stainless steel sheet.

In addition, at the time of manufacture of an embossed stainless steel pipe using a flat stainless steel sheet having a large thickness of 2.5 mm or more, it is possible to temper the flat stainless steel sheet in a high-temperature furnace, whereby it is possible to smoothly curve and round the stainless steel sheet using a pipe mill, whereby it is possible to manufacture a high-quality embossed stainless steel pipe using a flat stainless steel sheet having a large thickness of 2.5 mm or more.

Furthermore, it is possible to adjust the gap between a male roller and a female roller, into which an embossed stainless steel sheet is inserted, in the best state, whereby it is possible to smoothly perform the movement of an overall pipe line without damage to an embossed pattern, and therefore it is possible to smoothly perform all process without overwork of apparatuses in front and rear of the rollers. Consequently, the present invention has high industrial applicability.

**Claims**

1. An embossed stainless steel pipe manufacturing apparatus comprising: an uncoiler (1) configured to provide a flat stainless steel sheet (100); a centering guide roller (2) configured to guide the flat stainless steel sheet (100) supplied from the uncoiler (1) to an embossing machine (3) located at a rear thereof; the embossing machine (3) being configured to emboss the flat stainless steel sheet (100) supplied via the centering guide roller (2) in order to form an embossed stainless steel sheet (100'); and a pipe mill (4) configured to curve and round the embossed stainless steel sheet (100') supplied through the embossing machine (3) in order to manufacture an embossed pipe (200) having a weld seam portion (201) formed in a longitudinal direction, the pipe mill also being configured to weld the weld seam portion (201) of the embossed stainless steel pipe (200) in order to complete the embossed stainless steel pipe (200), wherein

   the embossing machine (3) comprises: an embossing press roller (30) comprising an upper roller (31) having a relief embossing pattern formed thereon and a lower roller (32) having an intaglio embossing pattern formed thereon, the upper roller and the lower roller being configured to be rotated in a state of being engaged with each other; a frame unit (33) defining an outer framework of the embossing machine, the frame unit being configured to support the embossing press roller (30); and a hydraulic cylinder (34) installed at an upper end of the frame unit (33), the upper roller (31) comprising: a roller body (311); rotary shafts (312) formed at centers of opposite side surfaces of the roller body (311); a relief embossing pattern unit (313) formed on a surface of the roller body (311); and a band-shaped groove (314) formed on the surface of the roller body (311) in a rotational direction of the roller so as to be lower than the relief embossing pattern unit (313) in order to partition the relief embossing pattern unit (313) at predetermined intervals, the lower roller (32) comprising: a roller body (321); rotary shafts (322) formed at centers of opposite side surfaces of the roller body (321); an intaglio embossing pattern unit (323) formed on the surface of the roller body (321); and a band-shaped protrusion (324) formed on the surface of the roller body (321) in the rotational direction of the roller so as to be higher than the intaglio embossing pattern unit (323) in order to partition the intaglio embossing pattern unit (323) at predetermined intervals, the protrusion (324) being configured to be inserted into the groove (314),

the embossed stainless steel pipe manufacturing apparatus being **characterized in that** it further comprises a slitting machine (10-1) installed in front of the uncoiler (1) and configured to slit a large-width flat stainless steel sheet into a plurality of flat sheets such that side surfaces of each of the slit flat stainless steel sheets (100) have vertical planes, the slitting machine (10-1) comprising: a stainless steel coil supply roller (12-1) forming a central rotary axis for a stainless steel coil (11-1) constituted by an uncut flat stainless steel sheet in a state of being wound, the stainless steel coil supply roller being configured to supply the flat stainless steel sheet to the uncoiler (1) through rotation thereof; and a plurality of slitters (13-1) installed at a rear of the stainless steel coil (11-1) being configured to slit the large-width flat stainless steel sheet (100) supplied from the stainless steel coil supply roller (12-1) to the uncoiler (1) into a plurality of flat sheets, the slitters being installed in a lateral direction at intervals adjusted based on a width of the flat stainless steel sheet (100) corresponding to an outer diameter of a stainless steel pipe to be manufactured, the slitters being configured to slit the flat stainless steel sheet (100) such that opposite side surfaces of the flat stainless steel sheet have vertical planes, and

**in that** the embossed stainless steel pipe manufacturing apparatus further comprises a curving adjustment means (30-1) installed between the embossing machine (3) and the pipe mill (4), the curving adjustment means (30-1) comprising: a curving male roller (31-1); a curving female roller (32-1) disposed under the curving male roller (31-1), the curving female roller being spaced apart from the curving male roller (31-1) by a predetermined distance in a horizontal direction; a pair of rotary shaft support units (33-1) on left and right sides of the curving male roller (31-1) and the curving female roller (32-1), the rotary shaft support units being configured to support rotary shafts (31a-1, 32a-1) connected respectively to the curving male roller (31-1) and the curving female roller (32-1); and a fastening nut (34-1) formed at an upper end of each of the rotary shaft support units (33-1), wherein, in use, the curving male roller (31-1) moves upwards and downwards by unfastening and fastening the fastening nuts (34-1), the curving adjustment means being configured to reduce, in use, a gap between the curving male roller (31-1) and the curving female roller (32-1), into which the embossed stainless steel sheet (100') is introduced, by a size corresponding to 10 to 15% of the embossed height of the embossed stainless steel sheet after the curving male roller and the curving female roller come into tight contact with said embossed stainless steel sheet.

2. The embossed stainless steel pipe manufacturing apparatus as claimed in claim 1, further comprising a tempering electric furnace (20-1) installed between the embossing machine (3) and the pipe mill (4) to temper the flat stainless steel sheet (100) in a case in which a thickness of the flat stainless steel sheet is 2.5 mm or more, the tempering electric furnace (20-1) being configured to temper the flat stainless steel sheet (100) having the large thickness and exhibiting hardness increased by embossing in order to reduce the hardness of the flat stainless steel sheet to hardness before embossing.

3. The embossed stainless steel pipe manufacturing apparatus as claimed in claim 2, the tempering electric furnace (20-1) comprising: an electric furnace (21-1); a tunnel type introduction unit (22-1) configured to supply the embossed stainless steel sheet (100') to the electric furnace (21-1); and a controller (23-1) configured to control temperature and time of the electric furnace (21-1).

4. An embossed stainless steel pipe manufacturing method comprising:

a first step of supplying a flat stainless steel sheet (100) to an embossing machine (3) from an uncoiler (1) via a centering guide roller (2);
a second step of embossing the flat stainless steel sheet (100) using an embossing press roller (30) of the embossing machine (3) to form an embossed stainless steel sheet (100') having an embossed pattern formed thereon; and
a third step of supplying the embossed stainless steel sheet (100') to a pipe mill (4) to manufacture an embossed stainless steel pipe (200) having a weld seam portion (201) formed in a longitudinal direction through curving and rounding processes and welding the weld seam portion (201) of the embossed stainless steel pipe (200) to complete the embossed stainless steel pipe (200), wherein
the embossed stainless steel sheet (100') has an embossed structure formed on an outer surface thereof, small-width planes are formed at opposite side edges of the embossed stainless steel sheet, opposite side surfaces of the embossed stainless steel sheet (100') are brought into contact with each other through the curving and rounding processes of the pipe mill (4), whereby the weld seam portion (201) is formed so as to have a V-shaped groove (201a), and the V-shaped groove (201a) is melted and fused by welding, whereby the embossed stainless steel pipe (200) is completed,

the embossed stainless steel pipe manufacturing method being **characterized in that** it further comprises, as a pre-process of the first step, setting a width of a flat stainless steel sheet necessary to obtain an outer diameter of an embossed stainless steel pipe to be produced, disposing slitters (13-1) of a slitting machine (10-1) according to the width of the flat stainless steel sheet, and slitting a large-width flat stainless steel sheet (100) supplied from a stainless steel coil supply roller (12-1) to the uncoiler (1) into a plurality of flat sheets according to the set width using the slitting machine (10-1) such that opposite side surfaces of the flat stainless steel sheet (100) have vertical planes, and

**in that** the embossed stainless steel pipe manufacturing method further comprises, between the second step and the third step, adjusting a gap between a curving male roller (31-1) and a curving female roller (32-1) of a curving adjustment means (30-1), between which the embossed stainless steel sheet (100') is inserted, to reduce an embossed height of the embossed stainless steel sheet (100') by 10 to 15%.

5. The embossed stainless steel pipe manufacturing method as claimed in claim 4,
wherein a thickness of the flat stainless steel sheet is 2.5 mm or more and further comprising, between the second step and the third step, tempering the flat stainless steel sheet (100) using a tempering electric furnace (20-1).

6. The embossed stainless steel pipe manufacturing method as claimed in claim 5 , the tempering being performed at a temperature of 600 to 1,300°C for 1 to 15 minutes.

7. The embossed stainless steel pipe manufacturing method as claimed in anyone of claims 4 to 6, and wherein in determining a slitting width of a flat stainless steel sheet to be used for an embossed stainless steel pipe having an outer diameter to be manufactured, three conditions below are satisfied in order to uniformly maintain the slitting width of the flat stainless steel sheet (100) even in a case in which embossed patterns are different from each other:

first, a flat stainless steel sheet (100) having a uniform thickness;
second, an embossed stainless steel sheet (100') having a uniform embossed height formed using the flat stainless steel sheet (100) having the uniform thickness; and
third, an embossed pattern formed on an outer surface of the embossed stainless steel sheet (100').

**Patentansprüche**

1. Vorrichtung zur Herstellung geprägter Edelstahlrohre, umfassend: eine Haspel (1), die derart konfiguriert ist, dass sie ein flaches Edelstahlblech (100) bereitstellt; eine zentrierende Führungsrolle (2), die derart konfiguriert ist, dass sie das von der Haspel (1) bereitgestellte flache Edelstahlblech (100) einer an einer Rückseite der Haspel (1) angeordneten Prägemaschine (3) zuführt,

wobei die Prägemaschine (3) derart konfiguriert ist, dass sie das durch die Führungsrolle (2) bereitgestellte flache Edelstahlblech (100) prägt, um ein geprägtes Edelstahlblech (100') zu bilden, und
ein Rohrwerk (4), das derart konfiguriert ist, dass es das durch die Prägemaschine (3) bereitgestellte geprägte Edelstahlblech (100') biegt und abrundet, um ein geprägtes Rohr (200) mit einem in Längsrichtung ausgebildeten Schweißnahtabschnitt (201) herzustellen,
wobei das Rohrwerk auch derart konfiguriert ist, dass es den Schweißnahtabschnitt (201) des geprägten Edelstahlrohrs (200) verschweißt, um das geprägte Edelstahlrohr (200) fertigzustellen, wobei

die Prägemaschine (3) umfasst: eine Prägepressrolle (30), umfassend eine Oberrolle (31) mit einem daran ausgebildeten Reliefprägemuster und eine Unterrolle (32) mit einem daran ausgebildeten Tiefdruckprägemuster, wobei Ober- und Unterrolle derart konfiguriert sind, dass sie in ineinandergreifendem Zustand rotiert werden; eine Rahmeneinheit (33), die einen äußeren Rahmen der Prägemaschine definiert, wobei die Rahmeneinheit derart konfiguriert ist, dass sie die Prägepressrolle (30) trägt; und einen an einem oberen Ende der Rahmeneinheit (33) installierten Hydraulikzylinder (34), wobei die Oberolle (31) umfasst: einen Rollenkörper (311); in Mittelpunkten entgegengesetzter Seitenflächen des Rollenkörpers (311) ausgebildete Drehwellen (312); eine auf einer Oberfläche des Rollenkörpers (311) ausgebildete Reliefprägemustereinheit (313); und eine auf der Oberfläche des Rollenkörpers (311) ausgebildete bandförmige Nut (314), die in einer Rotationsrichtung der Walze ausgebildet ist, sodass sie tiefer liegt als die Reliefprägemustereinheit (313), um die Reliefprägemustereinheit (313) in vorgegebenen Abständen aufzuteilen, wobei die Unterrolle (32) umfasst: einen Rollenkörper (321); in Mittelpunkten entgegengesetzter Seitenflächen des Rollenkörpers (321) ausgebildete Drehwellen (322); eine auf der Oberfläche des Rollenkörpers (321) ausgebildete Tiefdruckprägemustereinheit (323); und einen auf der Oberfläche des Rollenkörpers (321) ausgebildeten bandförmigen Vorsprung (324), der in einer Rotationsrichtung der Walze ausgebildet ist, sodass er höher liegt als die Tiefdruckprägemustereinheit (323), um die Tiefdruckprägemustereinheit (323) in vorgegebenen Abständen aufzuteilen, wobei der Vorsprung (324) derart konfiguriert ist, dass er in die Nut (314) eingeschoben werden kann,

wobei die Vorrichtung zur Herstellung geprägter Edelstahlrohre **dadurch gekennzeichnet ist, dass** sie ferner umfasst: eine vor der Haspel (1) installierte Schneidmaschine (10-1), die derart konfiguriert ist, dass sie ein breites Edelstahlblech in eine Vielzahl flacher Bleche schneidet, sodass Seitenflächen jedes der geschnittenen flachen Edelstahlbleche (100) vertikale Ebenen aufweisen, wobei die Schneidmaschine (10-1) umfasst: eine Zufuhrwalze (12-1) für eine Edelstahlspule, die eine zentrale Rotationsachse für eine Edelstahlspule (11-1) bildet, die aus einem ungeschnittenen flachen Edelstahlblech in gewickeltem Zustand besteht, wobei die Zufuhrwalze für eine Edelstahlblech derart konfiguriert ist, dass sie das flache Edelstahlblech der Haspel (1) zuführt, indem sie diese rotiert; und eine Vielzahl Schneidmaschinen (13-1), die an einer Rückseite der Edelstahlblech (11-1) installiert und derart konfiguriert sind, dass sie das von der Zufuhrwalze (12-1) der Haspel (1) zugeführte breite flache Edelstahlblech (100) in eine Vielzahl flacher Bleche schneidet, wobei die Schneidmaschinen in seitlicher Richtung in Abständen installiert sind, die aufgrund einer einem Außendurchmesser eines herzustellenden Edelstahlrohrs entsprechenden Breite des flachen Edelstahlblechs (100) angepasst werden, wobei die Schneidmaschinen derart konfiguriert sind, dass sie das flache Edelstahlblech (100) derart schneiden, dass die entgegengesetzten Seitenflächen des flachen Edelstahlblechs vertikale Ebenen aufweisen, und

dass die Vorrichtung zur Herstellung geprägter Edelstahlrohre ferner ein Mittel (30-1) zur Anpassung der Krümmung umfasst, das zwischen der Prägemaschine (3) und dem Rohrwerk (4) installiert ist,

wobei das Mittel zur Anpassung der Krümmung (30-1) umfasst: eine Rollenkrümmungspatrize (31-1); eine unter der Rollenkrümmungspatrize (31-1) angeordnete Rollenkrümmungsmatrize (32-1), wobei die Rollenkrümmungsmatrize in einem vorgegebenen Abstand in horizontaler Richtung von der Rollenkrümmungspatrize (31-1) beabstandet ist; ein Paar Drehwellenunterstützungseinheiten (33-1) an linken und rechten Seiten der Rollenkrümmungspatrize (31-1) und der Rollenkrümmungsmatrize (32-1), wobei die Unterstützungseinheiten derart konfiguriert sind, dass sie Drehwellen (31a-1, 32a-1) unterstützen, die jeweils mit der Rollenkrümmungspatrize (31-1) bzw. der Rollenkrümmungsmatrize (32-1) verbunden sind; und eine an einem oberen Ende jeder der Unterstützungseinheiten (33-1) ausgebildete Befestigungsmutter (34-1), wobei sich die Rollenkrümmungspatrize (31-1) im Einsatz durch Lösen und Befestigen der Befestigungsmuttern (34-1) auf- und abwärts bewegt, wobei das Mittel zur Anpassung der Krümmung derart konfiguriert ist, dass es im Einsatz einen Spalt zwischen der Rollenkrümmungspatrize (31-1) und der Rollenkrümmungsmatrize (32-1), in den der geprägte Edelstahlblech (100') eingeschoben wird, um eine 10 - 15 % der Prägehöhe des geprägten Edelstahlblechs entsprechende Größe reduziert, nachdem Rollenkrümmungspatrize und Rollenkrümmungsmatrize mit dem geprägten Edelstahlblech in engen Kontakt kommen.

2. Vorrichtung zur Herstellung geprägter Edelstahlrohre nach Anspruch 1,

ferner umfassend einen zwischen der Prägemaschine (3) und dem Rohrwerk (4) installierten elektrischen Anlassofen (20-1), um das flache Edelstahlblech (100) zu vergüten, wenn eine Dicke des Edelstahlblechs mindestens 2,5 mm beträgt,

wobei der elektrische Anlassofen (20-1) derart konfiguriert ist, dass er das flache Edelstahlblech (100) mit der großen Dicke und mit einer durch Prägen erhöhten Härte vergütet, um die Härte des flachen Edelstahlblechs auf die vor dem Prägen bestehende Härte zu reduzieren.

3. Vorrichtung zur Herstellung geprägter Edelstahlrohre nach Anspruch 2, wobei der elektrische Anlassofen (20-1) umfasst: einen Elektroofen (21-1); eine tunnelartige Einführungseinheit (22-1), die derart konfiguriert ist, dass sie das geprägte Edelstahlblech (100') dem Elektroofen (21-1) zuführt; und eine Steuerung (23-1), die derart konfiguriert ist, dass sie Temperatur und Zeit des Elektroofens (21-1) regelt.

4. Verfahren zur Herstellung geprägter Edelstahlrohre, umfassend:

in einem ersten Schritt: Zuführen eines flachen Edelstahlblechs (100) mittels einer zentrierenden Führungsrolle (2) von einer Haspel (1) zu einer Prägemaschine (3);

in einem zweiten Schritt: Prägen des flachen Edelstahlblechs (100) mit einer Prägepressrolle (30) der Prägemaschine (3), um ein geprägtes Edelstahlblech (100') mit darauf ausgebildetem Prägemuster zu bilden; und

in einem dritten Schritt: Zuführen des geprägten Edelstahlblechs (100') zu einem Rohrwerk (4), um ein geprägtes Edelstahlrohr (200) mit einem in Längsrichtung durch Biege- und Abrundungsprozesse ausgebildeten Schweißnahtabschnitt (201) und Schweißen des Schweißnahtabschnitts (201) des geprägten Edelstahlrohrs (200), um das geprägte Edelstahlrohr (200) fertigzustellen, wobei

das geprägte Edelstahlblech (100') eine auf einer Außenfläche davon ausgebildete Prägestruktur aufweist, Ebenen geringer Breite an entgegengesetzten Seitenkanten des geprägten Edelstahlblechs gebildet werden, entgegengesetzte Seitenflächen des geprägten Edelstahlblechs (100') durch die Biege- und Abrundungsprozesse des Rohrwerks (4) miteinander in Kontakt gebracht werden, wodurch der Schweißnahtabschnitt (201) derart gebildet wird, dass er eine V-förmige Nut (201a) aufweist, und die V-förmige Nut (201a) durch Schweißen aufgeschmolzen und fusioniert wird, wodurch das geprägte Edelstahlrohr (200) fertiggestellt wird,

wobei das Verfahren zur Herstellung geprägter Edelstahlrohre ferner **dadurch gekennzeichnet ist, dass** es ferner umfasst: im Vorfeld des ersten Schritts: Anpassen einer zur Erreichung eines Außendurchmessers eines herzustellenden geprägten Edelstahlrohrs erforderlichen Breite eines flachen Edelstahlblechs, Anordnen von Schneidmaschinen (13-1) einer Schneidmaschine (10-1) gemäß der Breite des flachen Edelstahlblechs und Schneiden eines von einer Zufuhrwalze (12-1) für eine Edelstahlspule zur Haspel (1) zugeführten breiten flachen Edelstahlblechs (100) in eine Vielzahl flacher Bleche gemäß der angepassten Breite mithilfe der Schneidmaschine (10-1), sodass entgegengesetzte Seitenflächen des flachen Edelstahlblechs (100) vertikale Ebenen aufweisen, und

dass das Verfahren zur Herstellung geprägter Edelstahlrohre zwischen dem zweiten und dritten Schritt ferner umfasst: Anpassen eines Spalts zwischen einer Rollenkrümmungspatrize (31-1) und einer Rollenkrümmungsmatrize (32-1) eines Mittels (30-1) zur Anpassung der Krümmung, zwischen die das geprägte Edelstahlblech (100') eingeschoben wird, um eine Prägehöhe des geprägten Edelstahlblechs (100') um 10 - 15 % zu reduzieren.

5. Verfahren zur Herstellung geprägter Edelstahlrohre nach Anspruch 4,
wobei eine Dicke des flachen Edelstahlblechs mindestens 2,5 mm beträgt und zwischen dem zweiten und dritten Schritt ferner umfassend: Vergüten des flachen Edelstahlblechs (100) mit einem elektrischen Anlassofen (20-1).

6. Verfahren zur Herstellung geprägter Edelstahlrohre nach Anspruch 5, wobei die Vergütung über 1 - 15 min bei einer Temperatur von 600 - 1300 °C erfolgt.

7. Verfahren zur Herstellung geprägter Edelstahlrohre nach einem der Ansprüche 4 bis 6, wobei
bei der Bestimmung einer Schnittbreite eines für ein herzustellendes geprägtes Edelstahlrohr mit einem Außendurchmesser zu verwendenden flachen Edelstahlblechs drei nachstehende Bedingungen erfüllt werden, um die Schnittbreite des flachen Edelstahlblechs (100) selbst dann einheitlich aufrechtzuerhalten, wenn sich Prägemuster voneinander unterscheiden:

erstens: ein flaches Edelstahlblech (100) mit einheitlicher Dicke;
zweitens: ein unter Verwendung des flachen Edelstahlblechs (100) mit einheitlicher Dicke ausgebildetes geprägtes Edelstahlblech (100') mit einheitlicher Prägehöhe und
drittens: ein auf einer Außenfläche des geprägten Edelstahlblechs (100') ausgebildetes Prägemuster.

## Revendications

1. - Appareil de fabrication de tube en acier inoxydable gaufré comprenant : une dérouleuse (1) configurée pour distribuer une tôle d'acier inoxydable plate (100) ; un rouleau de guidage de centrage (2) configuré pour guider la tôle d'acier inoxydable plate (100) distribuée par la dérouleuse (1) jusqu'à une machine de gaufrage (3) située à un arrière de celle-ci ; la machine de gaufrage (3) étant configurée pour gaufrer la tôle d'acier inoxydable plate (100) distribuée par l'intermédiaire du rouleau de guidage de centrage (2) afin de former une tôle d'acier inoxydable gaufrée (100') ; et un équipement de fabrication de tube (4) configuré pour courber et arrondir la tôle d'acier inoxydable gaufrée (100') distribuée par l'intermédiaire de la machine de gaufrage (3) afin de fabriquer un tube gaufré (200) ayant une partie de joint de soudure (201) formée dans une direction longitudinale, l'équipement de fabrication de tube étant également configuré pour souder la partie de joint de soudure (201) du tube en acier inoxydable gaufré (200) afin de finir le tube en acier inoxydable gaufré (200), dans lequel

la machine de gaufrage (3) comprend : une presse à gaufrer à rouleaux (30) comprenant un rouleau supérieur (31) ayant un motif de gaufrage en relief formé sur celui-ci et un rouleau inférieur (32) ayant un motif de gaufrage en creux formé sur celui-ci, le rouleau supérieur et le rouleau inférieur étant configurés pour être entraînés en rotation dans un état engagé l'un avec l'autre ; une unité de châssis (33) définissant un châssis extérieur de la machine de gaufrage, l'unité de châssis étant configurée pour supporter le presse à gaufrer à rouleaux (30) ; et un vérin hydraulique (34) installé à une extrémité supérieure de l'unité de châssis (33), le rouleau supérieur (31) comprenant : un corps de rouleau (311) ; des arbres rotatifs (312) formés à des centres de surfaces latérales opposées du corps de rouleau (311) ; une unité de motif de gaufrage en relief (313) formée sur une surface du corps de rouleau (311) ; et une rainure en forme de bande (314) formée sur la surface du corps de rouleau (311) dans une direction de rotation du rouleau de façon à être plus basse que l'unité de motif de gaufrage en relief (313) afin de séparer l'unité de motif de gaufrage en relief (313) à intervalles prédéterminés, le rouleau inférieur (32) comprenant : un corps de rouleau (321) ; des arbres rotatifs (322) formés à des centres de surfaces latérales opposées du corps de rouleau (321) ; une unité de motif de gaufrage en creux (323) formée sur la surface du corps de rouleau (321) ; et une saillie en forme de bande (324) formée sur la surface du corps de rouleau (321) dans la direction de rotation du rouleau de façon à être plus haute que l'unité de motif de gaufrage en creux (323) afin de séparer l'unité de motif de gaufrage en creux (323) à intervalles prédéterminés, la saillie (324) étant configurée pour être introduite dans la rainure (314),

l'appareil de fabrication de tube en acier inoxydable gaufré étant **caractérisé par le fait qu'**il comprend en outre une machine de refendage (10-1) installée devant la dérouleuse (1) et configurée pour refendre une tôle d'acier inoxydable plate de grande largeur en une pluralité de tôles plates de telle sorte que des surfaces latérales de chacune des tôles en acier inoxydable plates refendues (100) ont des plans verticaux, la machine de refendage (10-1) comprenant : un rouleau de distribution de bobine d'acier inoxydable (12-1) formant un axe de rotation central pour une bobine d'acier inoxydable (11-1) constituée d'une tôle d'acier inoxydable plate non coupée dans un état enroulé, le rouleau de distribution de bobine d'acier inoxydable étant configuré distribuer la tôle d'acier inoxydable plate à la dérouleuse (1) par rotation de celui-ci ; et une pluralité de couteaux circulaires (13-1) installés à un arrière de la bobine d'acier inoxydable (11-1) étant configurés pour refendre en une pluralité de tôles plates la tôle d'acier inoxydable plate de grande largeur (100) distribuée par le rouleau de distribution de bobine d'acier inoxydable (12-1) à la dérouleuse (1), les couteaux circulaires étant installés dans une direction latérale à des intervalles réglés sur la base d'une largeur de la tôle d'acier inoxydable plate (100) correspondant à un diamètre extérieur d'un tube en acier inoxydable à fabriquer, les couteaux circulaires étant configurés pour refendre la tôle d'acier inoxydable plate (100) de telle sorte que des surfaces latérales opposées de la tôle d'acier inoxydable plate ont des plans verticaux, et

**par le fait que** l'appareil de fabrication de tube en acier inoxydable gaufré comprend en outre un moyen de réglage de courbure (30-1) installé entre la machine de gaufrage (3) et l'équipement de fabrication de tube (4), le moyen de réglage de courbure (30-1) comprenant : un rouleau mâle de courbure (31-1) ; un rouleau femelle de courbure (32-1) disposé sous le rouleau mâle de courbure (31-1), le rouleau femelle de courbure étant espacé du rouleau mâle de courbure (31-1) d'une distance prédéterminée dans une direction horizontale ; une paire d'unités de support d'arbre rotatif (33-1) sur des côtés gauche et droit du rouleau mâle de courbure (31-1) et du rouleau femelle de courbure (32-1), les unités de support d'arbre rotatif étant configurées pour supporter des arbres rotatifs (31a-1, 32a-1) reliés respectivement au rouleau mâle de courbure (31-1) et au rouleau femelle de courbure (32-1) ; et un écrou de fixation (34-1) formé à une extrémité supérieure de chacune des unités de support d'arbre rotatif (33-1), en utilisation le rouleau mâle de courbure (31-1) se déplaçant vers le haut et vers le bas en détachant et en fixant les écrous de fixation (34-1), le moyen de réglage de courbure étant configuré pour réduire, en utilisation, un intervalle entre le rouleau mâle de courbure (31-1) et le rouleau femelle de courbure (32-1), dans lequel la tôle d'acier inoxydable gaufrée (100') est introduite, d'une taille correspondant à 10 à 15 % de la hauteur de gaufrage de la tôle d'acier inoxydable gaufrée après que le rouleau mâle de courbure et le rouleau femelle de courbure sont entrés en contact étroit avec ladite tôle d'acier inoxydable gaufrée.

2. - Appareil de fabrication de tube en acier inoxydable gaufré selon la revendication 1, comprenant en outre un four électrique de trempe (20-1) installé entre la machine de gaufrage (3) et l'équipement de fabrication de tube (4) pour tremper la tôle d'acier inoxydable plate (100) dans un cas où une épaisseur de la tôle d'acier inoxydable plate est de 2,5 mm ou plus, le four électrique de trempe (20-1) étant configuré pour tremper la tôle d'acier inoxydable plate (100) ayant la grande épaisseur et présentant une dureté accrue par gaufrage afin de réduire la dureté de la tôle d'acier inoxydable plate à la dureté avant gaufrage.

3. - Appareil de fabrication de tube en acier inoxydable gaufré selon la revendication 2, le four électrique de trempe (20-1) comprenant : un four électrique (21-1) ; une unité d'introduction de type tunnel (22-1) configurée pour distribuer la tôle d'acier inoxydable gaufrée (100') au four électrique (21-1) ; et une unité de commande (23-1) configurée pour commander la température et le temps du four électrique (21-1).

4. - Procédé de fabrication de tube en acier inoxydable gaufré comprenant :

une première étape de distribution d'une tôle d'acier inoxydable plate (100) à une machine de gaufrage (3) à partir d'une dérouleuse (1) par l'intermédiaire d'un rouleau de guidage de centrage (2) ;
une deuxième étape de gaufrage de la tôle d'acier inoxydable plate (100) à l'aide d'une presse à gaufrer à rouleaux (30) de la machine de gaufrage (3) pour former une tôle d'acier inoxydable gaufrée (100') ayant un motif gaufré formé sur celle-ci ; et
une troisième étape de distribution de la tôle d'acier inoxydable gaufrée (100') à un équipement de fabrication de tube (4) pour fabriquer un tube en acier inoxydable gaufré (200) ayant une partie de joint de soudure (201) formée dans une direction longitudinale par traitements de courbure et d'arrondissement, et de soudage de la partie de joint de soudure (201) du tube en acier inoxydable gaufré (200) pour finir le tube en acier inoxydable gaufré (200),
la tôle d'acier inoxydable gaufrée (100') ayant une structure gaufrée formée sur une surface extérieure de celle-ci, des plans de petite largeur étant formés à des bords latéraux opposés de la tôle d'acier inoxydable gaufrée, des surfaces latérales opposées de la tôle d'acier inoxydable gaufrée (100') étant amenées en contact l'une avec l'autre par les traitements de courbure et d'arrondissement de l'équipement de fabrication de tube (4), ce par quoi la partie de joint de soudure (201) est formée de façon à avoir une rainure en forme de V (201a), et la rainure en forme de V (201a) étant fondue et fusionnée par soudage, ce par quoi le tube en acier inoxydable gaufré (200) est fini,
le procédé de fabrication de tube en acier inoxydable gaufré étant **caractérisé par le fait qu'**il comprend en outre, en tant que traitement préalable à la première étape, définir une largeur d'une tôle d'acier inoxydable plate nécessaire pour obtenir un diamètre extérieur d'un tube en acier inoxydable gaufré à fabriquer, disposer des couteaux circulaires (13-1) d'une machine de refendage (10-1) en fonction de la largeur de la tôle d'acier inoxydable plate, et refendre une tôle d'acier inoxydable plate de grande largeur (100) distribuée à partir d'un rouleau de distribution de bobine d'acier inoxydable (12-1) à la dérouleuse (1) en une pluralité de tôles plates selon la largeur définie en utilisant la machine de refendage (10-1), de telle sorte que des surfaces latérales opposées de la tôle d'acier inoxydable plate (100) ont des plans verticaux, et
**par le fait que** le procédé de fabrication de tube en acier inoxydable gaufré comprend en outre, entre la deuxième étape et la troisième étape, régler un intervalle entre un rouleau mâle de courbure (31-1) et un rouleau femelle de courbure (32-1) d'un moyen de réglage de courbure (30-1), entre lesquels la tôle d'acier inoxydable gaufrée (100') est introduite, pour réduire une hauteur de gaufrage de la tôle d'acier inoxydable gaufrée (100') de 10 à 15 %.

5. - Procédé de fabrication de tube en acier inoxydable gaufré selon la revendication 4,
dans lequel une épaisseur de la tôle d'acier inoxydable plate est de 2,5 mm ou plus et comprenant en outre, entre la deuxième étape et la troisième étape, effectuer une trempe de la tôle d'acier inoxydable plate (100) en utilisant un four électrique de trempe (20-1).

6. - Procédé de fabrication de tube en acier inoxydable gaufré selon la revendication 5, la trempe étant effectuée à une température de 600 à 1300°C pendant 1 à 15 minutes.

7. - Procédé de fabrication de tube en acier inoxydable gaufré selon l'une quelconque des revendications 4 à 6, dans lequel
lors de la détermination d'une largeur de refendage d'une tôle d'acier inoxydable plate à utiliser pour un tube en acier inoxydable gaufré ayant un diamètre extérieur à fabriquer, trois conditions ci-dessous sont satisfaites afin de maintenir uniformément la largeur de refendage de la tôle d'acier inoxydable plate (100) même dans un cas où des motifs gaufrés sont différents les uns des autres :

premièrement, une tôle d'acier inoxydable plate (100) ayant une épaisseur uniforme ;
deuxièmement, une tôle d'acier inoxydable gaufrée (100') ayant une hauteur de gaufrage uniforme formée en utilisant la tôle d'acier inoxydable plate (100) ayant l'épaisseur uniforme ; et
troisièmement, un motif gaufré formé sur une surface extérieure de la tôle d'acier inoxydable gaufrée (100').

[Figure 1]

[Figure 2]

[Figure 3]

[Figure 4]

10-1

13-1

1

100

11-1

12-1

[Figure 5]

20-1

21-1

22-1

23-1

[Figure 6]

30-1

34-1

31-1     31a-1

34-1

33-1

33-1

32-1    32a-1

100'

[Figure 7]

30-1

34-1  34-1

31a-1  31-1

33-1  33-1

32a-1  32-1  100'

[Figure 8]

[Figure 9]

[Figure 10]

[Figure 11]

[Figure 12]

34

[Figure 13]

[Figure 14]

[Figure 15]

[Figure 16]

[Figure 17]

**EP 3 785 816 B1**

**REFERENCES CITED IN THE DESCRIPTION**

**Patent documents cited in the description**

- KR 10201824243
- KR 101868064
- KR 101611572
- KR 10404895
- KR 101399231
- KR 101017890
- KR 101604011